(19) Europäisches Patentamt
European Patent Office
Office européen des brevets

(11) **EP 4 156 332 A1**

(12) **EUROPEAN PATENT APPLICATION**
published in accordance with Art. 153(4) EPC

(43) Date of publication:
**29.03.2023 Bulletin 2023/13**

(21) Application number: **21906428.4**

(22) Date of filing: **07.12.2021**

(51) International Patent Classification (IPC):
*H01M 4/36* (2006.01)    *H01M 4/485* (2010.01)
*H01M 4/505* (2010.01)    *H01M 4/525* (2010.01)
*H01M 4/62* (2006.01)    *H01G 11/06* (2013.01)
*H01G 11/30* (2013.01)

(52) Cooperative Patent Classification (CPC):
**H01G 11/06; H01G 11/30; H01M 4/36;**
**H01M 4/485; H01M 4/505; H01M 4/525; H01M 4/62**

(86) International application number:
**PCT/JP2021/044845**

(87) International publication number:
**WO 2022/131065 (23.06.2022 Gazette 2022/25)**

(84) Designated Contracting States:
**AL AT BE BG CH CY CZ DE DK EE ES FI FR GB**
**GR HR HU IE IS IT LI LT LU LV MC MK MT NL NO**
**PL PT RO RS SE SI SK SM TR**
Designated Extension States:
**BA ME**
Designated Validation States:
**KH MA MD TN**

(30) Priority: **14.12.2020 JP 2020206473**

(71) Applicants:
• **The School Corporation Kansai University**
**Suita-shi, Osaka 564-8680 (JP)**

• **iElectrolyte Co., Ltd.**
**Suita-shi**
**Osaka 5650842 (JP)**

(72) Inventors:
• **SOEDA, Kazunari**
**Suita-shi, Osaka 564-8680 (JP)**
• **ISHIKAWA, Masashi**
**Suita-shi, Osaka 564-8680 (JP)**
• **TAKAHASHI, Takuya**
**Suita-shi, Osaka 565-0841 (JP)**

(74) Representative: **J A Kemp LLP**
**80 Turnmill Street**
**London EC1M 5QU (GB)**

(54) **ELECTRODE FOR ELECTROCHEMICAL DEVICES AND NONAQUEOUS ELECTROLYTE SECONDARY BATTERY**

(57)    The present invention provides an electrode for an electrochemical device, capable of being produced through an aqueous process using water as a solvent even in the case where an electrode active material that is highly susceptible to hydrolysis is used, and also provides a non-aqueous electrolyte secondary battery. The electrode for an electrochemical device includes: a neutralizing dispersant; and a complex oxide (A) capable of occluding and releasing lithium ions. The neutralizing dispersant contains: a water-soluble compound (B') containing a group 13 element (B) of the periodic table; and at least one water-soluble polymer (C) selected from the group consisting of an alkali metal salt, alkaline-earth metal salt, or ammonium salt of alginic acid, methylcellulose, carboxymethyl cellulose, carboxymethyl starch, or carrageenan, pullulan, guar gum, and xanthan gum. A film of the water-soluble polymer (C) is formed on a surface of the complex oxide (A), and the group 13 element (B) of the periodic table is present in the film of the water-soluble polymer (C).

EP 4 156 332 A1

**Description**

TECHNICAL FIELD

The present invention relates to an electrode for an electrochemical device and to a non-aqueous electrolyte secondary battery.

BACKGROUND ART

In recent years, power storage devices such as, for example, electrochemical capacitors and lithium-ion secondary batteries have been developed as electrochemical devices to be installed in mobile phones, electric automobiles, and the like. Among others, lithium-ion secondary batteries, which enable size and weight reduction of devices, can be charged and discharged with high efficiency, and have a high energy density, are widely used as a power source of not only portable devices, laptop computers, and household electric appliances but also hybrid automobiles and electric automobiles, for example. Moreover, lithium-ion secondary batteries are attracting new attention as power storage devices that are used in combination with a natural energy system such as a solar power generation system or a wind power generation system to store electric power generated by the system.

Electrodes included in an electrochemical device are each composed of an electrode active material directly involved in storage of electric energy, a conductive additive that serves to provide conduction paths in the active material, a binder, a current collector, and the like. The characteristics of the electrochemical device are highly dependent on the electrodes, and are greatly affected by the properties of the materials themselves of the respective electrodes and also the combination of the materials.

With the recent trend toward expanding application of lithium-ion secondary batteries and the like, there has been a growing demand for an increase in electrode capacity. As an active material capable of meeting this demand, an active material containing nickel at a high concentration (may also be referred to as "high-nickel active material" hereinafter) is now attracting attention, and it is expected that use thereof will increase in the future. On the other hand, it is known that higher capacity nickel-containing positive electrode materials have higher reactivity with water than conventional iron-based or manganese-based positive electrode materials. Thus, at present, a slurry for an electrode containing the above-described high-nickel active material is prepared using an organic solvent and a fluororesin binder.

An organic solvent used for preparation of a slurry is hydrophilic in most cases. Thus, when moisture in the air is mixed into the organic solvent, a positive electrode material undergoes hydrolysis to cause alkali generation, whereby fluorine is abstracted from the fluororesin binder and the slurry may turn into a gel. This poses a problem in that the slurry has to be prepared under a special environment with controlled humidity, such as in a dry room with a low dew point. Besides, the organic solvent is removed by drying at high temperature during the production of the electrode. That is, since the removal of the organic solvent by drying needs to be performed in a dry environment where careful attention must be paid to use and handling of fire, the electrode is produced while closely monitoring the lower explosive limit throughout the production process.

It is not preferable to use an organic solvent from the viewpoint of safety, environmental impact, handleability, and the like. On this account, studies on a method for producing a positive electrode through an aqueous process in which an electrode slurry is prepared using an aqueous dispersant and an aqueous binder are currently in progress. The production through an aqueous process is also expected to lead to cost reduction, because there is no need to use a dry room with a low dew point and the production process is controlled easily. However, since the positive electrode active material is highly reactive with water as described above, hydrolysis of the positive electrode active material proceeds in the presence of water. In addition, regardless of whether the electrode to be produced is a positive electrode or a negative electrode, an electrode material made of a lithium-containing metal oxide, in particular, is susceptible to hydrolysis. This causes a slurry for producing the electrode to be strongly alkaline with a pH of 10.5 or higher and also to turn into a gel. Accordingly, there are problems in that coating of the slurry tends to be difficult and an aluminum foil as a current collector is corroded by the strongly alkaline electrode slurry. On the other hand, deterioration of the electrode active material causes the electrochemical device to have a reduce capacity and deteriorated charge-discharge cycle characteristics and also to lose high-temperature durability.

On this account, for the purpose of preventing the deterioration of an electrode active material, using a binder that contains alginic acid in an acid form (Alg-H) as a main component has been considered (see Patent Document 1, for example). Patent Document 1 has proposed preventing the deterioration of the electrode active material by neutralizing a base contained in an electrode slurry using such a binder. Also, for the purpose of obtaining a positive electrode slurry that is stable against moisture, an attempt has been made to use a pH adjuster and carboxymethyl cellulose (see Patent Document 2, for example).

Citation List

Patent Documents

Patent Document 1: WO 2016/052715
Patent Document 2: JP 2009-64564 A

SUMMARY OF INVENTION

Technical Problem

However, examination of these conventional aqueous techniques revealed that the pH and the viscosity of the slurries disclosed therein could remain stable only for a short period of time of less than 24 hours. In mass production of batteries, it would be difficult to use a slurry in the production process unless the slurry exhibits a stable pH and a stable viscosity for at least 72 hours, considering the fact that plant operations may be suspended during holidays or in case of disasters. Also, as far as the storage stability is concerned, even a conventional slurry using an organic solvent NMP may encounter moisture contamination during the 72-hour storage period if the humidity control is suspended owing to a power outage, for example, and in particular, in the case of slurries containing a high-nickel active material, there are concerns about ensuring a sufficient pot life.

Also, examination on the high-temperature life characteristics achieved by the conventional aqueous techniques revealed that they were inferior to the high-temperature life characteristics of batteries including a positive electrode produced through a conventional process using an organic solvent. Accordingly, from the viewpoint of the pot life of a slurry and the high-temperature life characteristics of a battery produced using the slurry, the techniques disclosed in Patent Documents 1 and 2 still have room for improvement.

The present invention was made in light of the above-described problems, and it is an object of the present invention to provide an electrode for an electrochemical device, capable of being produced through an aqueous process using water as a solvent even when an electrode active material that is highly susceptible to hydrolysis is used, and also to provide a non-aqueous electrolyte secondary battery.

Solution to Problem

The inventors of the present invention conducted in-depth studies to solve the above-described problems, found that the problems can be solved by material technology that enables inhibition of an increase in pH and maintenance of the viscosity over a long period of time even for an electrode slurry prepared using water as a solvent, and completed the present invention based on this finding.

In order to achieve the above object, the present invention provides an electrode for an electrochemical device, including: a neutralizing dispersant; and a complex oxide (A) capable of occluding and releasing lithium ions, wherein the neutralizing dispersant contains: a water-soluble compound (B') containing a group 13 element (B) of the periodic table; and at least one water-soluble polymer (C) selected from the group consisting of an alkali metal salt, alkaline-earth metal salt, or ammonium salt of alginic acid, methylcellulose, carboxymethyl cellulose, carboxymethyl starch, or carrageenan, pullulan, guar gum, and xanthan gum, a film of the water-soluble polymer (C) is formed on a surface of the complex oxide (A), and the group 13 element (B) of the periodic table is present in the film of the water-soluble polymer (C).

In the electrode for an electrochemical device according to the present invention, the group 13 element (B) of the periodic table preferably includes boron.

The electrode for an electrochemical device according to the present invention is preferably adapted such that it further includes a conductive additive and a binder, wherein an electrode mixture is composed of the neutralizing dispersant, the complex oxide (A), the conductive additive, and the binder, and the boron content in the electrode mixture is not less than 0.001 wt% and not more than 5 wt%.

The electrode for an electrochemical device according to the present invention is preferably adapted such that, when the content of the water-soluble compound (B') containing the group 13 element (B) of the periodic table is taken as 100 parts by weight, the content of a boron-containing water-soluble compound is in a range of 51 parts by weight to 100 parts by weight.

In the electrode for an electrochemical device according to the present invention, it is preferable that the complex oxide (A) is a complex oxide having a composition represented by $Li_aNi_bCo_cMn_dM_{1-b-c-d}O_2$ or a complex oxide having a composition represented by either $Li_{4+x}Ti_5O_{12}$ or $Li_{2+x}Ti_3O_7$. In the above chemical formulae, M is at least one element selected from the group consisting of Al, Mg, Ti, Fe, V, Cr, Nb, Mo, W, Cu, Zn, Ga, In, Sn, Zr, Ru, and La, $0.8 \leq a \leq 1.0$, $0 < b \leq 1.0$, $0 \leq c \leq 0.4$, $0 \leq d \leq 0.35$, $0 < b + c + d \leq 1.0$, and $0 \leq x \leq 3$.

The present invention also provides a non-aqueous electrolyte secondary battery including: a positive electrode; a negative electrode; and an electrolyte interposed between the positive electrode and the negative electrode, wherein at least one of the positive electrode and the negative electrode is the electrode for an electrochemical device according to the present invention.

Advantageous Effects of Invention

According to the present invention, it becomes possible to obtain an electrode slurry capable of inhibiting an increase in pH (alkalization) and a decrease in viscosity over a long period of time even when an electrode active material that is highly susceptible to hydrolysis, such as a lithium-containing metal oxide, is used, and with the use of such a slurry, it is possible to provide an electrode that can be suitably used for an electrochemical device. By using this electrode for an electrochemical device, it is possible to provide a non-aqueous electrolyte secondary battery with excellent high-temperature durability.

DESCRIPTION OF EMBODIMENTS

While embodiments of the present invention will be described in detail below, the scope of the present invention is not restricted by the following description. Embodiments of the present invention are not limited to those exemplified below, and various changes and modifications may be made to the following exemplary embodiments as appropriate without departing from the spirit of the present invention. Unless otherwise specified, the numerical range "A to B" as described herein means "not less than A and not more than B". The terms "mass" and "weight" and also the terms "mass %" and "wt%" are to be considered synonymous with each other.

The electrode for an electrochemical device according to the present invention includes a neutralizing dispersant and a complex oxide (A) capable of occluding and releasing lithium ions. The neutralizing dispersant contains: a water-soluble compound containing a group 13 element (B) of the periodic table; and a water-soluble polymer (C). The water-soluble compound containing a group 13 element (B) of the periodic table acts as a neutralizer, and the water-soluble polymer (C) acts as a dispersant.

<Complex Oxide (A) Capable of Occluding and Releasing Lithium Ions>

A complex oxide (A) capable of occluding and releasing lithium ions (hereinafter also referred to simply as "complex oxide (A)") functions as an electrode active material. In the case where the electrode is a positive electrode, a material selected from $LiCoO_2$, $LiFePO_4$, $LiNi_{0.5}Mn_{1.5}O_4$, $LiMnO_4$, and complex oxides having a composition represented by $Li_aNi_bCo_cMn_dM_{1-b-c-d}O_2$ can be used as the complex oxide (A). The elements contained in the above-described materials may be present at ratios that are somewhat different from the ratios indicated in the chemical formulae. In the above chemical formulae, it is preferable that M is at least one element selected from the group consisting of Al, Mg, Ti, Fe, V, Cr, Nb, Mo, W, Cu, Zn, Ga, In, Sn, Zr, Ru, and La, and that $0.8 \leq a \leq 1.0$, $0 < b \leq 1.0$, $0 \leq c \leq 0.4$, $0 \leq d \leq 0.35$, and $0 < b + c + d \leq 1.0$ are satisfied. In the case where the electrode is a negative electrode, a material selected from compounds represented by $Li_{4+x}Ti_5O_{12}$ and $Li_{2+x}Ti_3O_7$, which are lithium titanium oxides, can be used. In the above chemical formulae, x is a real number that satisfies $0 \leq x \leq 3$.

In addition, a silicon-based inorganic compound or a transition metal oxide such as CuO, $Cu_2O$, $MnO_2$, $MoO_3$, $V_2O_5$, $CrO_3$, $MoO_3$, $Fe_2O_3$, $Ni_2O_3$, or $CoO_3$ also can be used.

The silicon-based inorganic compound may be, for example, a silicon oxide such as $SiO_z$ ($0.5 \leq z \leq 1.6$), $LiSiO_2$, or $M_qSiO_w$ (where M = Na, Mg, or Ca, $0.1 \leq q \leq 4$, and $0 < w \leq 4$) or a silicon oxide composed of equilibrium phases including two or more selected from Si, $SiO_2$, $Li_2Si_2O_5$, $Li_2SiO_3$, and $Li_4SiO_4$.

$SiO_z$ in which z is 0.5 or more provides good cycle characteristics, whereby the volume expansion can be reduced and pulverization can be inhibited. When z is 1.6 or less, the resistance of the silicon oxide can be kept low. From the viewpoint of cycle characteristics, the best cycle characteristics are obtained when z = 1. The silicon oxide may be either a single-phase silicon oxide produced without being heated or a phase-separated silicon oxide that has undergone heating during production to cause disproportionation, thereby being separated into an amorphous $SiO_2$ matrix and microcrystalline or amorphous silicon dispersed in the matrix. It is acceptable if the matrix contains trace amounts of impurity elements.

The silicon-based inorganic compound has an average particle size (D50) of preferably 0.1 to 20 pm and more preferably 1 to 15 pm. When the silicon-based inorganic compound has a particle size in such a range, pulverization of the compound can be inhibited more easily and particles of the compound have a sufficient specific surface area.

Accordingly, the particle size in such a range is advantageous from the viewpoint of ensuring the output characteristics. These particles may form a complex with a carbon material or may be coated with a carbon material for the purpose of enhancing the conductivity. Examples of the method for forming a complex include mechanical alloying, carbonization, and chemical vapor deposition on particle surfaces.

$SiO_z$ particles can be produced by conventionally known methods. For example, many production methods of $SiO_z$ commonly include generating $SiO_z$ gas in a furnace and then causing it to be deposited on a deposition substrate to form a lump of $SiO_z$. This is then pulverized to produce $SiO_z$ particles.

Although lithium pre-doping is typically performed by a direct pre-doping method involving direct contact with a lithium source or by an electrochemical method (electrochemical pre-doping method), other methods may also be used. In the direct pre-doping method, a silicon-based inorganic compound is brought into contact with a lithium source. The lithium source is preferably in the form of a metallic foil sheet or a liquid. The contact step may be performed at any desired timing, which may be either before or after the completion of the production of the electrode. Preferable examples of the embodiment of the direct pre-doping method include: adhering a metallic lithium foil sheet to a sheet electrode formed using a silicon-based inorganic compound (the electrode obtained by applying a slurry composed of the silicon-based inorganic compound, a neutralizing dispersant of the present invention, a binder, a conductive additive, and the like, drying the slurry, and then processing it into a predetermined shape) for contact between the lithium source and the compound and then heating the resulting laminate at a temperature equal to or lower than the melting point of the metallic lithium; mixing a silicon-based inorganic compound in the form of power and a lithium source in the form of power together while heating; and immersing a sheet electrode formed using a silicon-based inorganic compound or the silicon-based inorganic compound in the form of powder in a lithium-containing liquid for contact between the lithium source and the compound. Examples of the lithium source include lithium metals, organic lithium compounds, lithium hydrides, and lithium aluminum hydrides.

In the electrochemical pre-doping method, a sheet electrode formed using a silicon-based inorganic compound and a counter electrode formed of a material containing metallic lithium or lithium are used. By applying a current to an electrochemical cell constituted by adding a lithium ion conductive non-aqueous electrolyte to these electrodes, lithium ions can be electrochemically doped into a silicon oxide. Pre-doping may be performed using the above-described methods in any desired combination.

As the complex oxide (A), one of the above-described materials may be used alone, or two or more of them may be used in combination. When two or more of the above-described materials are used in combination, the positive electrode can be formed using at least two selected from the above-described materials that can be used for the positive electrode in combination, and the negative electrode can be formed using at least two selected from the above-described materials that can be used for the negative electrode in combination. The mixing ratio of the materials used for the complex oxide (A) can be set freely.

A device used for mixing a plurality of materials is not limited to particular types of devices. For example, when a rotary mixer is used, examples thereof include a cylindrical mixer, a twin-shell mixer, a double conical mixer, a cubic-type mixer, and a hoe-shaped mixer, and when a stationary mixer is used, examples thereof include a spiral mixer, a ribbon mixer, a muller mixer, a helical flight mixer, a pugmill mixer, and a fluidizing mixer.

The complex oxide (A) is preferably in the form of particles. In this case, the particle size is preferably approximately 400 nm to 40 pm and more preferably in the range of 200 nm to 20 pm. When the particle size is less than 400 nm, dispersion in the slurry tends to be difficult. When the particle size is more than 40 pm, cracking of an electrode plate is likely to occur. The term "particle size" as used herein means the primary particle size or the secondary particle size. Examples of a preferable shape of the complex oxide (A) other than the particle shape include a scale-like shape. In this case, the particle size is preferably 40 pm or less either in length or width, whichever is shorter.

The present invention enables slurry preparation through an aqueous process even for higher capacity ternary-type positive electrode materials and nickel-containing electrode materials that contain the above-described high-nickel active material, whereas such electrode materials have higher reactivity with water than conventional iron-based or manganese-based electrode materials and thus have to be made into slurries using an organic solvent and a fluororesin binder at present. Since it is expected that use of these electrode materials will increase in the future, technology that enables production of electrodes with the use of aqueous slurries has been long awaited.

It is also possible to use the complex oxide (A) doped with a small amount of an element such as fluorine, boron, aluminum, chromium, zirconium, molybdenum, or iron or the complex oxide (A) whose particle surfaces are treated with carbon, MgO, $Al_2O_3$, $SiO_2$, or the like.

The complex oxide (A) may include a carbon material in its surface portion. This can improve the conductivity of the complex oxide (A), thereby improving the battery characteristics of a lithium-ion battery that includes the complex oxide (A) with such a structure as a positive electrode material or a negative electrode material. The carbon material preferably has an average thickness of not less than 3 nm and not more than 5 pm. When the average thickness of the carbon material that coats the complex oxide (A) is not less than 3 nm, the effect of improving the conductivity is exhibited. When the average thickness of the carbon material that coats the complex oxide (A) is not more than 5 pm, a decrease in the electrode density can be inhibited, whereby a decrease in the battery capacity can be inhibited.

In the non-aqueous electrolyte secondary battery of the present invention, at least one of the positive electrode and the negative electrode is the electrode for an electrochemical device according to the present invention. When either one of the positive electrode and the negative electrode is not the electrode for an electrochemical device according to the present invention, a suitable electrode active material used for the electrode is, for example: a metal chalcogenide such as $TiS_2$, $MoS_2$, or $NbSe_3$; sulfur, a sulfur-selenium complex, a complex composed of sulfur or a sulfur-selenium complex with porous carbon such as template carbon or activated carbon, or a complex composed of sulfur or a sulfur-selenium complex with a modified polymer such as modified polyacrylonitrile; a conductive polymer compound such as polyacene, polyparaphenylene, polypyrrole, or polyaniline; or silicon, zinc, bismuth, graphite, hardly graphitizable carbon, or activated carbon.

<Water-Soluble Compound (B') Containing Group 13 Element (B) of Periodic Table>

Examples of the group 13 element (B) of the periodic table contained in the neutralizing dispersant include boron, aluminum, gallium, indium, and thallium. Of these, the group 13 element (B) is preferably at least one selected from boron and aluminum. A water-soluble compound containing the group 13 element (B) of the periodic table, i.e., a water-soluble compound containing at least one selected from boron, aluminum, gallium, indium, and thallium, is hereinafter referred to as "periodic table group 13 element-containing compound (B') (also referred to as "group 13 element-containing compound (B'))". Examples of the group 13 element-containing compound (B') include oxides, sulfides, inorganic acids, and inorganic acid salts. Of these, a compound containing boron or aluminum can be preferably used from the viewpoint of availability, and it is more preferable to use a boron compound selected from boric acid, a borate, and a mixture thereof or an aluminate. The group 13 element-containing compound (B') acts as a neutralizer.

The boron compound selected from boric acid, a borate, and a mixture thereof is not limited to particular boron compounds as long as it is industrially available. The boric acid may be, for example, $H_3BO_3$ (orthoboric acid) and/or $HBO_2$ (metaboric acid). The borate may be, for example, borax (sodium tetraborate, $Na_2B_4O_7 \cdot 10H_2O$), sodium pyroborate ($Na_2B_4O_7$), pentahydrate thereof ($Na_2B_4O_7 \cdot 5H_2O$), or sodium pentaborate ($NaB_5O_8$).

Of these boron compounds, boric acid ($H_3BO_3$), borax, sodium pentaborate, or a mixture thereof is particularly preferable. When the boron compound is a mixture of boric acid and a sodium salt of boric acid, the molar ratio Na/B of sodium (Na) to boron (B) is preferably more than 0 and not more than 0.3. When the molar ratio Na/B is in this range, an aqueous solution containing the boron compound can have a pH of 7 or lower and thus can exhibit a neutralizing and dispersing function. The mixture of boric acid and a sodium salt of boric acid may be in a state containing polyborate ions. The mixture can be brought to a state containing polyborate ions by being completely dissolved in hot water. Also, the aqueous solution in which the mixture is completely dissolved may be evaporated to dryness to obtain a powder of the mixture in such a state.

<Preparation Example of Polyboronate Ions>

100 g of water was heated to 80°C. 42 g of boric acid and 35 g of borax were added thereto and dissolved therein, and the resulting mixture was allowed to cool to room temperature. The pH of the solution was 5.8. Thereafter, the solution was evaporated to dryness by a spray-drying method in an environment at a temperature of 140°C. The spray-drying method is a method of obtaining a powder by spraying fine mist of a liquid into hot air to instantaneously dry the liquid.

The boron-containing compounds as described above exhibit excellent properties in stabilizing the viscosity and the pH of a slurry containing the complex oxide when they are used in combination with a water-soluble polymer (C) to be described below, and thus are preferable.

The mixing ratio of the group 13 element-containing compound (B') and the complex oxide (A) in the present invention is such that the content of the group 13 element-containing compound (B') with respect to the complex oxide (A) is 0.01 wt% or more and preferably 0.02 wt% or more and also 10 wt% or less and preferably 4 wt% or less. When the content of the group 13 element-containing compound (B') is too low, the stability of the pH and viscosity of the slurry becomes insufficient. When the content of the group 13 element-containing compound (B') is too high, the resulting electrode will have a high resistance, which causes the internal resistance of a battery to be too high. As a result, the battery capacity tends to be small.

The boron content in an electrode mixture preferably is in the range of 0.001 wt% to 5 wt%, and when the content of the group 13 element-containing compound (B') is taken as 100 parts by weight, the content of a boron-containing water-soluble compound is in the range of 51 parts by weight to 100 parts by weight.

<Water-Soluble Polymer (C)>

The water-soluble polymer (C) contained in the above-described neutralizing dispersant is preferably a polymer that is completely soluble in water. However, even a water-insoluble polymer can be used by introducing a hydrophilic component thereto to render the water-insoluble polymer partially soluble in water, thereby imparting the dispersibility in water. That is, the water-soluble polymer (C) acts as a dispersant.

The water-soluble polymer (C) preferably has a functional group that contains a cation or anion capable of binding to ions and/or a functional group that contains a hydrogen bond donor (hydrogen donor atom) or hydrogen bond acceptor (hydrogen acceptor atom). Alternatively, the water-soluble polymer (C) is preferably a polymer that can be chemically modified so as to have such a functional group(s). Specific examples of the functional groups include: oxygen-containing functional groups such as a carboxyl group, a hydroxy group, a carbonyl group, an ether group, and an ester group; sulfur-containing functional groups such as a sulfo group, a sulfonyl group, and a sulfinyl group; nitrogen-containing functional groups such as an amino group, an amide group, and an imide group; phosphorus-containing functional groups such as a phosphate group; and substituents containing a highly electronegative halogen or the like. Of these, functional groups containing a carboxyl group, a hydroxy group, a carbonyl group, an amino group, an amide group, or an imide group are preferable. Specific examples of the water-soluble polymer (C) include water-soluble polysaccharide thickeners, acrylic resins, vinyl alcohol resins, and polyethers.

Among others, water-soluble polysaccharide thickeners have a suitable degree of water solubility and a suitable degree of thickening properties and are preferable as they can allow a slurry to exhibit long-term stability. Water-soluble polysaccharide thickeners are preferable also because they can provide excellent smoothness to an electrode surface when the slurry is applied thereto, they can be dried at relatively low temperature, and further, they can achieve both a high capacity and improved cycle characteristics of a battery.

Polysaccharides are compounds in which one type or two or more types of monosaccharides represented as polyhydroxyaldehyde or polyhydroxyketone are polymerized via glycosidic linkage. Specific examples of compounds corresponding to water-soluble polysaccharide thickeners include: alkali metal salts, alkaline-earth metal salts, and ammonium salts of compounds such as alginic acid, methylcellulose, carboxymethyl cellulose, carboxymethyl starch, and carrageenan; pullulan; guar gum; and xanthan gum. Of these, it is more preferable to use an alkali metal salt, alkaline-earth metal salt, or ammonium salt of any of carboxymethyl cellulose, alginic acid, and carrageenan from the viewpoint of excellent dispersibility.

The water-soluble polymer (C) preferably exhibits a viscosity of 250 cP to 78,000 cP when it is in the form of a 1 wt% aqueous solution. When the viscosity is in this range, solubility in water can be easily ensured, thus allowing a slurry to have viscosity stability. When the viscosity is too low, it becomes difficult to maintain the dispersed state for a long period of time, and sedimentation of an active material occurs within a short time. On the other hand, when the viscosity is too high, a large amount of water is required to increase the fluidity of the slurry, and this causes a decrease in the solid content concentration of the slurry. As a result, the time required for drying is extended, leading to a longer tact time for the coating step during production. Although there is no particular limitation on the degree of etherification of carboxymethyl cellulose, it is preferable to use carboxymethyl cellulose with the degree of etherification of 0.4 to 1.6. Although there is no particular limitation on the ratio of mannuronic acid to guluronic acid (which is called "M/G ratio") of alginic acid, it is preferable to use alginic acid with the M/G ratio of 0.5 to 1.5.

The mixing ratio of the water-soluble polymer (C) and the complex oxide (A) in the present invention is such that the content of the water-soluble polymer (C) with respect to the complex oxide (A) is 0.3 wt% or more and preferably 0.5 wt% or more and also 7 wt% or less and preferably 5 wt% or less. When the ratio of the water-soluble polymer (C) is too high, the battery capacity tends to be small owing to a decrease in the amount of the complex oxide serving as the active material. When the ratio of the water-soluble polymer (C) is too low, the dispersibility decreases, whereby sedimentation of the slurry is caused and it becomes difficult to obtain long-term storage stability.

When the total amount of the periodic table group 13 element-containing compound (B') and the water-soluble polymer (C) accounts for 2 wt% of the electrode, the content of the periodic table group 13 element-containing compound (B') is preferably not less than 0.2 wt% and not more than 1.6 wt% and more preferably not less than 0.5 wt% and not more than 1.5 wt%.

When the pH stabilizing effect is not sufficient or the stability of the slurry imparted by thickening is not sufficient, the neutralizing dispersant of the present invention may further contain at least one of a neutralizer (auxiliary) and a dispersant (auxiliary). Examples of the neutralizer (auxiliary) include disodium phosphate ($NaH_2PO_4$) and Alg-H. Examples of the dispersant (auxiliary) include Alg-H, methylcellulose, carboxymethyl starch, carrageenan, polyvinyl pyrrolidone (PVP), polyvinyl alcohol (PVA), and sodium polyacrylate (PAA). Only one neutralizer (auxiliary) and/or dispersant (auxiliary) may be used, or two or more neutralizers (auxiliary) and/or dispersants (auxiliary) may be used in combination. The neutralizer (auxiliary) is preferably added in an amount not to exceed the content of the neutralizer, and the dispersant (auxiliary) is preferably added in an amount not to exceed the content of the dispersant.

<Binder Composition>

It is preferable to use an electrode binder composition in an electrode(s) (positive electrode and/or negative electrode) included in the non-aqueous electrolyte secondary battery of the present invention. The binder composition may contain the water-soluble polymer (C) mixed therein beforehand, and may contain the periodic table group 13 element-containing compound (B') mixed therein beforehand. Although there is no particular limitation on the types and combination of the water-soluble polymer (C) and the periodic table group 13 element-containing compound (B') to be mixed in the binder composition, it is preferable to select the types and combination that provide high compatibility when they are mixed with the binder composition.

At the time of mixing, the mixing ratio among the binder composition, the water-soluble polymer (C), and the periodic table group 13 element-containing compound (B') is set such that the total content of the water-soluble polymer (C) and the periodic table group 13 element-containing compound (B') with respect to the binder composition is 10 wt% or more and preferably 25 wt% or more. Also, the total content is 800 wt% or less and preferably 500 wt% or less. When the total content is too low, the dispersibility would be insufficient, whereby it becomes difficult to maintain the long-term storage characteristics of the slurry and the battery characteristics may be deteriorated owing to an increase in the resistance of an electrode plate. On the other hand, when the total content is too high, the strength of the electrode plate may be deteriorated.

An emulsion or a polymeric aqueous dispersion can be used for the binder composition. Examples of an emulsion that can be preferably used include synthetic resin emulsions such as an "emulsion of a polyacrylic acid copolymer resin", "conjugated diene polymer emulsion", and "emulsion of a fluorine-containing copolymer". Examples of a polymeric aqueous dispersion that can be preferably used include resin-based aqueous dispersions developed for use in batteries, such as an "aqueous dispersion of a fluorine-containing copolymer".

By using the binder composition including such an emulsion or polymeric aqueous dispersion in combination with the above-described water-soluble polymer (C) and periodic table group 13 element-containing compound (B'), the strength of the electrode plate can be enhanced. An electrode plate with high strength can extend the life of a device because it improves the durability of the device over long-term use and against expansion and contraction caused by charging and discharging. Also, it is presumed that an electrode plate with high adhesion strength does not cause a problem in that an active material layer may peel off from a current collector when producing a battery by winding the electrode plate.

The "emulsion of a polyacrylic acid copolymer resin" is an emulsion of a copolymer resin, obtained through emulsion polymerization of, e.g., an acrylic acid monomer and at least one other reactive monomer in water. Examples of the other reactive monomer include: vinylidene fluoride monomers; styrene monomers; nitrile group-containing ethylenically unsaturated monomers, including α, β-unsaturated nitrile monomers such as acrylonitrile, methacrylonitrile, α-chloroacrylonitrile, crotonitrile, α-ethylacrylonitrile, α-cyanoacrylate, vinylidene cyanide, and fumaronitrile; carboxylic acid-containing ethylenically unsaturated monomers, including monofunctional monomers such as methacrylic acid and acrylic acid, fumaric acid, maleic acid, itaconic acid, citraconic acid, mesaconic acid, glutaconic acid, 1,2,3,6-tetrahydrophthalic acid, 3-methyl-1,2,3,6-tetrahydrophthalic acid, 4-methyl-1,2,3,6-tetrahydrophthalic acid, methyl-3,6-endomethylene-1,2,3,6- tetrahydrophthalic acid, exo-3,6-epoxy-1,2,3,6-tetrahydrophthalic acid, and himic acid; anhydrides of the above-described carboxylic acid-containing ethylenically unsaturated monomers; saponified products of the above-described anhydrides; ketone group-containing ethylenically unsaturated monomers such as methyl vinyl ketone, ethyl vinyl ketone, isopropyl vinyl ketone, isobutyl vinyl ketone, t-butyl vinyl ketone, and hexyl vinyl ketone; and organic acid vinyl ester group-containing ethylenically unsaturated monomers such as vinyl acetate, vinyl propionate, vinyl butyrate, vinyl trimethylacetate, vinyl caproate, vinyl caprylate, vinyl laurate, vinyl palmitate, and vinyl stearate. One type of such reactive monomer may be used, or two or more types of such reactive monomers may be used in combination.

The polyacrylic acid copolymer resin may have its terminal(s) substituted with a specific functional group(s) to obtain a modified version of the polyacrylic acid copolymer resin that is reactive with a certain type of monomer and the like. Examples of the modified version of the polyacrylic acid copolymer resin include epoxy-modified polyacrylic acid copolymer resins, carboxy-modified polyacrylic acid copolymer resins, isocyanate-modified polyacrylic acid copolymer resins, and hydrogen-modified polyacrylic acid copolymer resins.

As the "conjugated diene polymer emulsion", an emulsion of styrene-butadiene copolymer rubber can be suitably used. The emulsion of styrene-butadiene copolymer rubber contains particles of a copolymer of styrene and butadiene, and has a copolymer component derived from styrene and a copolymer component derived from butadiene. The content of the copolymer component derived from styrene is preferably 50 to 80 mol% with respect to the total amount of the copolymer components constituting the styrene-butadiene copolymer. The content of the copolymer component derived from butadiene is preferably 20 to 50 mol% with respect to the total amount of the copolymer components.

The styrene-butadiene copolymer may contain at least one other reactive monomer in addition to the copolymer component derived from styrene and the copolymer component derived from butadiene. As the other reactive monomer, reactive monomers given above as examples of the component of the emulsion of a polyacrylic acid copolymer resin can be used, for example.

When the styrene-butadiene copolymer contains the other reactive monomer(s), the content of the other reactive monomer(s) is preferably 1 to 30 mol% with respect to the total amount of the copolymer components constituting the styrene-butadiene copolymer. The styrene-butadiene copolymer may be a random copolymer, a block copolymer, or a graft copolymer. The styrene-butadiene copolymer may be a carboxy-modified styrene-butadiene copolymer.

The emulsion of styrene-butadiene copolymer rubber is an emulsion of rubber particles, obtained through emulsion polymerization of a styrene monomer and a butadiene monomer and, if necessary, the other reactive monomer(s) in water, and may also be referred to as latex or synthetic rubber latex.

Instead of the styrene-butadiene copolymer rubber, butadiene rubber (BR), isoprene rubber (IR), chloroprene rubber (CR), nitrile rubber (NBR), butyl rubber (IIR), ethylene-propylene rubber (EPDM), natural rubber (NR), or the like can also be used.

The "fluorine-containing copolymer" is a copolymer that contains a polymer of at least one type of fluorine-containing monomer in its molecule. The fluorine-containing copolymer may be, for example, a copolymer of polyvinylidene fluoride (PVDF) and polyvinyl alcohol (PVA), a tetrafluoroethylene-hexafluoropropylene copolymer (FEP), a tetrafluoroethylene-perfluoroalkyl vinyl ether copolymer (PFA), polyvinylidene fluoride-hexafluoropropylene (PVdF-co-HFP), an ethylene-tetrafluoroethylene copolymer (ETFE), polychlorotrifluoroethylene (PCTFE), a propylene-tetrafluoroethylene copolymer, or an ethylene-chlorotrifluoroethylene copolymer (ECTFE).

The "emulsion of a fluorine-containing copolymer" is an emulsion of a copolymer resin, obtained through emulsion polymerization of one type of fluorine-containing monomer and at least one other reactive monomer in water or emulsion polymerization of, e.g., two or more types of fluorine-containing monomers in water. The "aqueous dispersion of a fluorine-containing copolymer" is an aqueous solution of a copolymer resin that is obtained through copolymerization of one type of fluorine-containing monomer and at least one other reactive monomer or copolymerization of, e.g., two or more types of fluorine-containing monomers, or a dispersion obtained by dispersing such a copolymer resin in water.

Examples of the other reactive monomer include PVA, hexafluoropropylene, ethylene, and propylene.

The emulsion of a polyacrylic acid copolymer resin, the emulsion of styrene-butadiene copolymer rubber, and the emulsion or aqueous dispersion of a fluorine-containing copolymer respectively contain the polyacrylic acid copolymer resin, the styrene-butadiene copolymer rubber, and the fluorine-containing copolymer in an amount (solid content concentration) of preferably 0.1 to 80 mass% and more preferably 0.5 to 65 mass%.

The solid content concentration of the binder composition is preferably 0.5 to 95 mass% and more preferably 1.0 to 85 mass%. The solid content concentration is the proportion of the total mass of the polyacrylic acid copolymer resin, the conjugated diene polymer, or the fluorine-containing copolymer in the mass in the binder composition.

<Slurry>

A slurry for producing an electrode for an electrochemical device according to the present invention contains a binder composition, an electrode active material (complex oxide (A)), water, a group 13 element-containing compound (B'), and a water-soluble polymer (C).

Since this slurry contains the group 13 element (B) of the periodic table and the water-soluble polymer (C), decomposition of the active material and also an increase in pH can be inhibited even though the slurry is an aqueous slurry. This slurry can inhibit an increase in pH over a long period of time and thus can achieve a long-term viscosity stability.

It has been considered that electrode active materials used for a positive electrode (positive electrode materials) basically should not be added to water. On this account, for use in the production process using an aqueous slurry, only materials whose pH hardly change even when they come into contact with water have been studied. However, according to the electrode for an electrochemical device of the present invention, positive electrode materials susceptible to hydrolysis, such as, for example, nickel-based materials also can be used even when a slurry for producing an electrode is an aqueous slurry. By applying such a slurry to a current collector such as a current collecting foil, it is possible to produce a coated electrode without causing corrosion. Thus, it is not necessary to treat the current collector so as to impart corrosion resistance. In addition, the aqueous slurry is preferable also from the viewpoint of safety and environmental impact, because only water vapor is discharged when drying the slurry. Moreover, equipment cleaning only requires washing with water and thus can be performed in a simple manner.

The solid content concentration of the slurry is preferably from 65 mass% to less than 95 mass%. When the solid content concentration is outside this range, the slurry contains too much water and it takes a long time to dry the slurry. Also, the viscosity of the slurry is too low to allow the slurry to stay on the foil, and the stability of the amount of the slurry to be applied may be deteriorated. Likewise, when the solid content concentration is too high, the amount of the slurry to be applied also becomes unstable.

The slurry can be prepared by the following two methods, for example.

(Method 1)

A complex oxide (A), a water-soluble compound (B') containing a group 13 element (B) such as boron, and a water-soluble polymer (C), each in a powder form, are mixed together. Water is further added thereto, and the resulting mixture is kneaded. Lastly, a binder composition is added thereto, and the resulting mixture is kneaded.

(Method 2)

An aqueous solution that contains a predetermined mass% of a water-soluble compound (B') containing a group 13 element (B) such as boron and a predetermined mass% of a water-soluble polymer (C) is prepared in advance. Subsequently, a complex oxide (A) and the aqueous solution are mixed together and kneaded, and water is then added thereto to adjust the viscosity. Lastly, a binder composition is added thereto, and the resulting mixture is kneaded.

According to these methods, the group 13 element (B) can be uniformly dispersed in the film of the water-soluble polymer (C). Also, these methods can increase the solid content of the slurry and thus can set the solid content concentration to 80% or higher. A higher solid content concentration is preferable because the pH stability and the dispersion stability tend to be improved. These methods also shorten the time required for drying, which brings about advantages in that the process tact time is shortened and the heat quantity required for drying is also reduced, resulting in a reduced production cost.

Examples of methods used for mixing and kneading in the above include mixing with various types of pulverizers, mixers, stirrers, and the like and dispersing utilizing ultrasonic waves. More specifically, mixing and kneading can be performed by: processing that utilizes a shear force or impact force caused by a mixer, a high-speed rotary mixer, a shear mixer, a blender, an ultrasonic homogenizer, a high-pressure homogenizer, a ball mill, or the like; or a method using a Waring blender, a flash mixer, a turbulizer, or the like. These methods may be used in combination as appropriate.

The slurry may contain a conductive additive to ensure the conductivity. The conductive additive can reduce the internal resistance of a battery. The conductive additive is not limited to particular materials, and examples thereof include metals, carbon materials, conductive polymers, and conductive glass. Of these, carbon materials are preferable, and examples thereof include nanocarbons such as carbon nanotubes, carbon nanofibers, carbon nanohorns, and fullerenes, acetylene black, furnace black, thermal black, channel black, Ketjen black®, Vulcan, graphene, vapor-phase grown carbon fibers (VGCF), and graphite. Of these, acetylene black, Ketjen black, VGCF, and carbon nanotubes are more preferable. Carbon nanotubes can be single-walled, double-walled, or multi-walled carbon nanotubes. One type of conductive additive may be used alone, or two or more types of conductive additives may be used in combination. Graphite can be used when an active material to be used has an action potential vs. lithium that does not fall below 0.15 V The conductive additive may be subjected to an acid treatment or alkali treatment to improve the hydrophilicity.

The median diameter (also referred to as "D50" or "50% particle size") of the conductive additive is preferably in the range of 10 nm to 1 pm. When the median diameter is in this range, the conductive additive can be dispersed stably and uniformly in the slurry. The median diameter can be calculated by measuring the particle size distribution according to a laser diffraction method using a bulk density analyzer MT-3300 (manufactured by Microtrac).

In order to improve the conductivity of the electrode, a conductive material may be contained in an electrode active material layer. The conductive material is not limited to particular materials as long as the conductive material can impart conductivity to the active material when a proper amount of the conductive material is mixed with the active material. Typical examples of the conductive material include: carbon powders such as acetylene black, carbon black, and graphite; and fibers, powders, and foils of various metals. Further, another active material that is not an oxide and is commonly used in lithium-ion batteries, such as graphite, hardly graphitizable carbon, easily graphitizable carbon, or activated carbon, may be used in combination.,

Water used for the slurry is not limited to particular types of water, and commonly used water can be used. For example, tap water, distilled water, ion-exchange water, pure water, or ultrapure water can be used. Of these, ion-exchange water, pure water, and ultrapure water are preferable.

The water may contain an organic solvent that can be uniformly mixed with water (hydrophilic organic solvent). Examples of the hydrophilic organic solvent include: N-methyl-2-pyrrolidone; dimethyl sulfoxide; alcohols such as methanol, ethanol, 2-propanol (IPA), isopropanol, n-butanol, and t-butanol; ketones such as acetone and methyl ethyl ketone (MEK); ethers such as 1,4-dioxane and tetrahydrofuran (THF); N,N-dimethylformamide (DMF); N,N-dimethylacetamide (DMAc); dimethyl sulfoxide (DMSO); acetonitrile; and ethyl acetate. One type of hydrophilic organic solvent may be used, or two or more types of hydrophilic organic solvents may be used. However, from the viewpoint of safety, environmental impact, handleability, and the like, it is preferable to use only water and not to use an organic solvent.

The blending ratio of water and an organic solvent may be determined as appropriate in consideration of the type of the organic solvent, the affinity between the water and the organic solvent, and the like.

The ratio of each component in the solid content of the slurry is, for example, preferably as follows, when the total amount of the electrode active material, the binder composition, the water-soluble polymer (C), the periodic table group 13 element-containing compound (B'), and the conductive additive is taken as 100 mass%: the electrode active material is 60 to 99 mass%; the total amount of the binder composition, the water-soluble polymer (C), and the periodic table group 13 element-containing compound (B') is 0.1 to 25 mass%; and the conductive additive is 0.1 to 10 mass%. It is more preferable that the electrode active material is 80 to 95 mass%, the total amount of the binder composition, the water-soluble polymer (C), and the periodic table group 13 element-containing compound (B') is 0.5 to 15 mass%, and the conductive additive is 0.5 to 5 mass%.

<Production Method of Electrode for Electrochemical Device>

The electrode for an electrochemical device according to the present invention can be produced by, for example, applying the above-described slurry to the surface of an electrode substrate (current collector), drying the slurry, and subjecting the electrode substrate to press molding. In this manner, the electrode for an electrochemical device, with an electrode mixture layer present on the surface of the electrode substrate can be produced. The above-described electrode mixture constitutes a portion corresponding to an electrode layer formed on the electrode after drying the slurry applied to the electrode substrate such as a foil, and is a mixture containing an electrode active material (composite oxide (A)), a conductive additive, a neutralizing dispersant, and a binder.

The slurry can be applied, for example, using a knife coater, a comma coater, or a die coater. As the electrode substrate (current collector), an aluminum foil, a copper foil, a stainless steel foil, a nickel foil, or the like can be used. For the purpose of improving the conductivity, the electrode substrate may be such a foil provided with a carbon coating.

The amount of the slurry to be applied onto the electrode substrate can be set such that, for example, the electrode mixture layer formed after drying has a thickness in the range of 0.02 to 0.40 mm and preferably in the range of 0.03 to 0.25 mm.

The temperature of the drying step can be set as appropriate within the range of, for example, 35°C to 150°C and preferably 40°C to 135°C. The time period of the drying step can be set as appropriate within the range of, for example, 10 to 120 seconds and preferably 10 to 80 seconds. It is also preferable to perform the drying step under reduced pressure. In this case, the pressure is preferably set to 10 Pa or less, and drying may be performed for several hours.

The thus-obtained electrode for an electrochemical device may be used either as a positive electrode or a negative electrode of the electrochemical device.

<Electrode for Electrochemical Device>

The thus-obtained electrode for an electrochemical device has the following characteristics. When the group 13 element (B) of the periodic table is boron, the complex oxide (A) is coated with the water-soluble polymer (C), and a specific amount of boron (B) is contained in the film of the water-soluble polymer (C). In the above-described electrode, the complex oxide (A) is protected by being coated with the water-soluble polymer (C) containing the boron (B). Owing to this protection, it is possible to obtain battery characteristics that are superior especially in terms of heat resistance, as will be described below.

The reason for improvement in heat resistance is considered to be that the complex oxide (A) is protected against attack from hydrofluoric acid and the like, which are thermal decomposition products of an electrolyte. In addition, since the complex oxide (A) is protected by being coated with the water-soluble polymer (C) containing the boron (B), oxidative and reductive decomposition of the electrolyte is reduced, and this, in particular, brings about an effect of reducing gas generation. The reduction of gas generation is considered to be achieved by an increase in the reaction overpotential of the electrolyte, and this effect is exhibited when the boron (B) is incorporated into the film of the water-soluble polymer (C). In contrast, an electrode without the film of the water-soluble polymer (C) containing boron (B) has low heat resistance, and may encounter problems such that gas generation occurs, an overvoltage is caused, the capacity is low, and metal elution cannot be prevented.

In the electrode for an electrochemical device, the boron content in the electrode mixture is preferably not less than 0.001 wt% and not more than 5 wt%. When the boron content is in this range, good battery characteristics at high temperature and good cycle characteristics can be obtained. In order to determine whether the boron content required in the present invention is satisfied, it is possible to use an analysis method based on absorbance measurement or X-ray photoelectron spectroscopy (XPS), for example. When the boron content is much higher than this range, the ratio of the complex oxide (A) serving as the electrode active material decreases, whereby the battery capacity tends to decrease. When the boron content is too low, the dispersibility is deteriorated, whereby sedimentation is likely to occur in the slurry composed of the electrode mixture and water, and this makes it difficult to obtain long-term storage characteristics. Also, it becomes difficult to obtain good battery characteristics at high temperature.

<Absorbance Measurement>

2 mg of the electrode mixture scraped from the electrode was dispersed in 10 ml of water to obtain an aqueous solution, which is then filtered. The resulting aqueous solution (filtrate) is subjected to azomethine H absorptiometry using a spectrophotometer, and the absorbance in the wavelength range of 410 to 425 pm is measured. When the boron content in the electrode mixture is not less than 0.001 wt% and not more than 5 wt%, the absorbance is more than 0 and not more than 2.3.

To determine the correlation between the absorbance and the boron concentration, standard solutions with known boron concentrations (1 ppm, 2 ppm, 3 ppm, 4 ppm, and so on) are prepared, the absorbances of these solutions are measured using a colorimeter, and then the thus-measured absorbances are plotted against the boron concentrations. Since the absorbance is proportional to the boron concentration according to the Lambert-Beer law, a linear graph is formed as a result of the plotting. Using this graph as a calibration curve, the boron concentration is read from the absorbance. The absorbance is preferably measured at a wavelength of 410 to 425 nm, which corresponds to the maximum absorption wavelength of the complex formed by a borate ion and an azomethine H reagent (coloring solution). In measurement of the blank value, the same amount of azomethine H reagent as in the case of forming the complex in the filtrate is mixed with pure water, and the absorbance of the resulting mixture is measured.

A battery with good high-temperature durability and energy density could be obtained when the absorbance of an aqueous solution was in the above-described range. In other words, it was confirmed that, when the absorbance of an aqueous solution is outside the above-described range, a battery with high-temperature durability is not obtained, and the energy density of the battery is reduced owing to an increase in the resistance.

The "absorbance" as used herein refers to a dimensionless quantity that indicates the amount of decrease in light intensity, obtained when a filtrate of an aqueous solution in which the above-described electrode mixture is dispersed is subjected to measurement using a spectrophotometer. The azomethine H absorptiometry is a method for analyzing boron. In this method, a compound that has been formed by reacting azomethine H with boron and has developed color in a specific visible light wavelength range is measured by spectrophotometry.

When color development is hindered by a transition metal present in the filtrate, the filtrate may contain a chelating agent for removing metal ions. Examples of the chelating agent includes EDTA disodium salt (dihydrate), EDTA tetrasodium salt (tetrahydrate), CyDTA (trans-1,2-cyclohexanediaminetetraacetate), GEDTA (glycoletherdiamine tetraacetate), and mixtures thereof. Of these, DTA disodium salt (dihydrate), EDTA tetrasodium salt (tetrahydrate), and mixtures thereof are particularly preferable, because they can mask metal ions present at high concentrations. Examples of metal ions that can be masked by chelating agents include iron ions, copper ions, and aluminum ions.

<X-Ray Photoelectron Spectroscopy (XPS)>

An electrode sample (electrode mixture) is measured by X-ray photoelectron spectroscopy (XPS) using an X-ray photoelectron spectrometer (JEOL Ltd., JPS9030). The electrode sample to be measured is set flat on a sample stand, and the spectra of O1s (530 to 533 eV) and boron (B1s) (189 to 195 eV) are measured using $K\alpha$-radiation emitted from aluminum as a radiation source. The background is removed by the Tougaard method, and the peak area ($S_O$) of the spectrum of O1s and the peak area ($S_B$) of the spectrum of B1s are determined. Further, the concentration of each of the elements is calculated by multiplying the peak area and the device sensitivity factor according to the relative sensitivity factor (RSF) method. The surface element content ratio of boron (B) (B element content/O element content) obtained as per the following equation is defined as the surface element content ratio of boron on the electrode surface.

$$\text{Equation: Surface element content ratio of boron (B element content/O element content)} = [\text{Element concentration of boron calculated from } S_B \text{ using the relative sensitivity factor method (RSF method)}] \div [\text{Element concentration of oxygen calculated from } S_O \text{ using the same method}] \times 100$$

When the boron content in the electrode mixture is not less than 0.001 wt% and not more than 5 wt%, the surface element content ratio of boron (B) is more than 0 and not more than 15%.

It was confirmed that, when the surface element content ratio of boron (B) is outside the above range, a battery with high-temperature durability is not obtained, and the energy density of the battery is reduced owing to an increase in the resistance.

<Electrochemical Device (Non-aqueous Electrolyte Secondary Battery)>

The non-aqueous electrolyte secondary battery according to the present invention includes a positive electrode, a negative electrode, and an electrolyte interposed between the positive electrode and the negative electrode, and at least one of the positive electrode and the negative electrode is the electrode for an electrochemical device according to the present invention.

In the electrochemical device, a separator is arranged between the positive electrode and the negative electrode to prevent short-circuiting between the positive electrode and the negative electrode. The positive electrode and the negative electrode are each provided with a current collector, and both the current collectors are connected to a power supply. Switching between charging and discharging can be performed by operating the power supply.

Examples of the electrochemical device include non-aqueous electrolyte secondary batteries such as lithium-ion secondary batteries and electrochemical capacitors, and further include non-lithium-ion batteries, lithium-ion capacitors, and dye-sensitized solar cells.

The electrochemical device can be used as a high-performance power storage device with a high level of safety. Accordingly, the electrochemical device may be installed in: small electronic equipment such as a mobile phone, a notebook computer, a personal digital assistant (PDA), a video camera, or a digital camera; transportation equipment (vehicle) such as an electric bicycle, an electric automobile, or a train; power generation equipment for thermal power generation, wind power generation, hydroelectric power generation, nuclear power generation, or geothermal power generation; a natural energy storage system; or the like.

It is more preferable that the non-aqueous electrolyte secondary battery according to the present invention is a lithium-ion secondary battery. High-nickel active materials are promising as electrode materials for lithium-ion secondary batteries because they can increase the electrode capacity. However, as described above, there is a problem in that high-nickel active materials are highly susceptible to hydrolysis.

The non-aqueous electrolyte secondary battery according to the present invention includes the electrode for an electrochemical device according to the present invention, and thus exhibits charge and discharge characteristics that are superior especially in terms of heat resistance to those of non-aqueous electrolyte secondary batteries including an electrode produced from a slurry prepared using an organic solvent. This is demonstrated by examples of the present invention.

In the non-aqueous electrolyte secondary battery of the present invention, either the positive electrode or the negative electrode may be the electrode for an electrochemical device of the present invention. As long as the electrode for an electrochemical device of the present invention is used as one of the positive electrode and the negative electrode, the other electrode (counter electrode) may be produced using an aqueous material or a non-aqueous material.

The non-aqueous electrolyte secondary battery of the present invention may be, for example; a cylindrical battery, which is in the form of a wound body obtained by winding a laminate of strip-shaped electrodes and a separator; a laminate-type battery, in which electrodes each wrapped with a separator are stacked and packed in an aluminum-laminated pouch; or a coin-type battery in which electrode pellets and a separator are stacked. A stainless steel case, an aluminum case, or the like is used as an outer case.

<Electrolyte>

The electrolyte may be a non-aqueous electrolyte solution obtained by dissolving a lithium salt in a non-aqueous solvent, a gel-like, rubber-like, or solid sheet-like electrolyte prepared by mixing a non-aqueous electrolyte with a organic macromolecular compound, or a solid electrolyte obtained by pressing solid compound particles (for example, a sulfide or an oxide) having solid-state lithium ion conductivity.

Examples of the non-aqueous solvent used for the non-aqueous electrolyte solution include: cyclic carbonates such as propylene carbonate, ethylene carbonate, vinylene carbonate, and butylene carbonate; chain carbonates such as diethyl carbonate, dimethyl carbonate, and ethyl methyl carbonate; cyclic ethers such as tetrahydrofuran, 2-methyltetrahydrofuran, and 3-dioxolane; chain ethers such as diethoxyethane and dimethoxyethane; sulfone solvents such as sulfolane, ethyl isopropyl sulfone, dimethyl sulfone, and di-n-propyl sulfone; chain esters such as methyl formate, methyl acetate, and methyl propionate; cyclic esters such as $\gamma$-butyrolactone and $\gamma$-valerolactone; and acetonitrile.

One of such non-aqueous solvents may be used alone, or a mixture of two or more of them may be used. When a mixed solvent is used, the combination of a cyclic carbonate and a chain carbonate is preferable. This combination can provide an electrolyte solution with high ionic conductivity, because the cyclic carbonate dissolves the lithium salt at a high concentration and the chain carbonate can lower the viscosity of the electrolyte solution without lowering the solubility of the lithium salt. Such a mixed solvent is highly resistant to oxidation and reduction and thus is preferable also from the viewpoint of being less susceptible to continuous electrolysis in the range of the operating voltage of lithium-ion batteries.

The non-aqueous solvent used for the non-aqueous electrolyte solution may be an ionic liquid. An ionic liquid is a molten salt that is composed of a combination of a cation and an anion and is present in a liquid state over a wide temperature range including room temperature. At least one of the following cations and at least one of the following anions may be combined as appropriate to obtain an ionic liquid.

The cation of the ionic liquid is not limited to particular cations as long as it allows the transfer of lithium ions in the electrolyte solution and enables charging and discharging of a storage device. Examples of the cation include imidazolium, pyridinium, pyrrolidinium, piperidinium, tetraalkylammonium, pyrazolium, and tetraalkylphosphonium.

Examples of the imidazolium include 1-ethyl-3-methylimidazolium [EMIm$^+$], 1-butyl-3-methylimidazolium, 1-ethyl-2,3-dimethylimidazolium, 1-allyl-3-methylimidazolium, 1-allyl-3-ethylimidazolium, 1-allyl-3-butylimidazolium, and 1,3-diallylimidazolium.

Examples of the pyridinium include 1-propylpyridinium, 1-butylpyridinium, 1-allylpyridinium, 1-ethyl-3-(hydroxymethyl)pyridinium, and 1-ethyl-3-methylpyridinium.

Examples of the pyrrolidinium include N-methyl-N-propylpyrrolidinium [MPPyr$^+$], N-methyl-N-butylpyrrolidinium, N-methyl-N-methoxymethylpyrrolidinium, N-allyl-N-methylpyrrolidinium, and N-allyl-N-propylpyrrolidinium.

Examples of the piperidinium include N-methyl-N-propylpiperidinium, N-methyl-N-butylpiperidinium, N-methyl-N-methoxymethylpiperidinium, and N-allyl-N-propylpiperidinium.

Examples of the tetraalkylammonium include N,N,N-trimethyl-N-propylammonium and methyltrioctylammonium.

Examples of the pyrazolium include 1-ethyl-2,3,5-trimethylpyrazolium, 1-propyl-2,3,5-trimethylpyrazolium, 1-butyl-2,3,5-trimethylpyrazolium, and 1-allyl-2,3,5-trimethylpyrazolium.

Examples of the tetraalkylphosphonium include P-butyl-P,P,P-triethylphosphonium and P,P,P-triethyl-P-(2-methoxyethyl)phosphonium.

The anion used in combination with any of these cations to obtain the ionic liquid may be an anion that allows the transfer of lithium ions in the electrolyte solution and enables charging and discharging of a power storage device. Examples of the anion include $BF_4^-$, $PF_6^-$, $SbF_6^-$, $NO_3^-$, $CF_3SO_3^-$, $(FSO_2)_2N^-$[bis(fluorosulfonyl)imide anion; FSI$^-$], $(CF_3SO_2)_2N^-$[bis(trifluoromethylsulfonyl)imide; TFSI$^-$], $(C2F_5SO_2)_2N^-$, $(CF_3SO_2)_3C^-$, $CF_3CO_2^-$, $C_3F_7CO_2^-$, $CH_3CO_2^-$, and $(CN)_2N^-$. Two or more types of such anions may be contained.

The lithium salt used for the non-aqueous electrolyte solution is not limited to particular lithium salts, and examples thereof include: fluoride lithium salts such as $LiPF_6$, $LiBF_4$, and $LiAsF_6$; halide lithium salts such as $LiClO_4$, LiCl, LiBr, and LiI; and sulfonate lithium salts such as $LiN(CF_3SO_2)_2$(LiTFSI) and $LiN(FSO_2)_2$(LiFSI). One type of lithium salt may be used alone, or a mixture of two or more types of lithium salts may be used. The concentration of the lithium salt in the non-aqueous electrolyte solution is 0.3 to 2.5 mol/dm$^3$.

In the case where the non-aqueous electrolyte solution is mixed with an organic macromolecular compound to obtain a gel-like, rubber-like, or solid sheet-like electrolyte, the organic macromolecular compound may be, for example, polyethylene oxide, polypropylene oxide, polyvinyl alcohol, polyvinyl butyral, polyvinylpyrrolidone, polyvinylidene carbonate, polyacrylonitrile, or PVDF-HFP.

The non-aqueous electrolyte solution may contain an additive in order to inhibit oxidative decomposition in the positive electrode or reductive decomposition in the negative electrode. Examples of the additive include vinylene carbonate, fluoroethylene carbonate, ethylene sulfide, 1,3-propanesultone, 1,3-propenesultone, lithium bis(oxalate)borate, and lithium difluoro(oxalate)borate. The content of the additive in the non-aqueous electrolyte solution is preferably in the range of 10 to 0.5 wt%. An excessively high content is not preferable because it leads to an increase in the resistance of an electrochemical device. These additives have a function of protecting the electrode surface by forming a strong coating on the electrode. Owing to their protective effect, these additives reduce damage caused on the electrode in each cycle and thus are effective in improving cycle characteristics.

It should be noted that, when the neutralizing dispersant of the present invention is used, cycle characteristics can be improved without using the additive. Although the reason for this is not definite, it can be considered as follows, for example. Vinylene carbonate and the like have a function of protecting the electrode surface by forming a strong coating on the electrode, and it is considered that, owing to their protective effect, they reduce damage caused on the electrode in each cycle and this leads to the improvement in cycle characteristics. The additive, however, forms the coating on the electrode through decomposition of the additive itself during charging. Since the additive consumes a small amount of lithium contained in the electrode at this time, the amount of the additive is preferably set as small as possible within a range in which the cycle characteristics are not impaired. The neutralizing dispersant of the present invention, composed of, for example, a combination of a boron compound and a naturally-occurring polymer (water-soluble polymer) or the like, has properties of forming a coating that coats an electrode active material, and it is considered that the neutralizing dispersant exhibits a protective effect similar to those of vinylene carbonate and the like, and this leads to the improvement in cycle characteristics. Thus, the present invention can improve the cycle characteristics while reducing the consumption of lithium.

<Separator>

In the electrochemical device of the present invention, a separator is provided between the positive electrode and the negative electrode in order to prevent short-circuiting between them. The separator may be, for example, a porous film containing polyethylene, polypropylene, cellulose, polyvinylidene fluoride (PVdF), or polyimide, a cellulose non-woven fabric, a chitosan non-woven fabric, or an alginate non-woven fabric. A coating layer may be provided on one or both sides of the separator. The coating layer is: a layer formed of inorganic particles made of alumina, zirconia, silica, or the like and having a particle size of several nanometers to several micrometers; a layer formed of an organic substance such as pulp, aramid, alginic acid, chitosan, or the like; or a layer containing both of such inorganic particles and such an organic substance. The coating layer is effective in improving the heat resistance and preventing short-circuiting.

EXAMPLES

The present invention will be more specifically described with reference to examples and comparative examples. It is to be noted, however, that the present invention is not limited thereto.

<Evaluation of Stability of Slurries (Production Examples A1 to A70 and C1 to C70)>

Slurries for obtaining electrodes for an electrochemical device according to the present invention were prepared through an aqueous process, and the stability of the resulting slurries was evaluated.

[Production of Positive Electrode Mixture Slurries Through Aqueous Production Process (Production Examples A1 to A70)]

A positive electrode mixture slurry of each production example was produced by mixing 95 parts of a positive electrode material (complex oxide (A)), 2 parts of acetylene black as a conductive additive, 2 parts of a neutralizing dispersant, and 1 part of an acrylic emulsion as a binder, then adding 25 parts of water thereto, and kneading the resulting mixture using a planetary mixer (TK HIVIS MIX, PRIMIX Corporation). As the positive electrode material, three types of materials, namely, NMC622 ($LiNi_{0.6}CO_{0.2}Mn_{0.2}O_2$), NMC811 ($LiNi_{0.8}Co_{0.1}Mn_{0.1}O_2$), and NCA (lithium nickel-cobalt-aluminium oxide $LiNi_{0.8}Co_{0.15}Al_{0.05}O_2$) were used. Materials listed in Tables 1 to 3 were used as the neutralizing dispersant. In Production Examples A1 to A30 and A32 to A34, 2 parts of the neutralizing dispersant were composed of 1.3 parts of a neutralizer and 0.7 parts of a dispersant. For the neutralizer indicated as "Boron oxide + Na phosphate", the weight ratio between the boron oxide and the Na phosphate was set to 7 : 3. In Production Examples A31 and A38, 1 part of "boric acid + $Na_2B_4O_7$ (weight ratio = 0.7 : 1)" and 0.3 parts of 2Na phosphate were used. In Production Examples A32 to A34, a plurality of types of dispersants were used, and each of these production examples, 0.5 parts of "an alkali metal salt, alkaline-earth metal salt, or ammonium salt" was used, and 0.2 parts of "pullulan, guar gum, or xanthan gum" was used. In Production Examples A35 to A38, 0.5 parts of a dispersant and 0.2 parts of a dispersant (auxiliary) were used. The neutralizer corresponds to a water-soluble compound containing a group 13 element (B) of the periodic table, and the dispersant corresponds to a water-soluble polymer (C).

[Production of Negative Electrode Mixture Slurries Through Aqueous Production Process (Production Examples C1 to C70)]

An electrode mixture slurry of each production example was produced in the same manner as described in [Production of Positive Electrode Mixture Slurries Through Aqueous Production Process] above, except that 95 parts of a negative electrode material, 2 parts of acetylene black as a conductive additive, 2 parts of a neutralizing dispersant, and 1 part of an acrylic emulsion as a binder were mixed together, and 25 parts of water was added to the resulting mixture. As shown in Tables 4 to 6, a material selected from a complex oxide (A), graphite, SiO, and SiOLi was used as the negative electrode material, and $Li_4Ti_5O_{12}$ (LTO) or $LiNbO_2$ (LNO) was used as the complex oxide (A). Materials listed in Tables 4 to 6 were used as the neutralizing dispersant. The neutralizing dispersants used in C1 to C70 are the same as those used in A1 to A70, respectively.

<Evaluation of Long-Term Storage Stability of Viscosity of Slurries>

The viscosity of each slurry obtained was measured using a "digital viscometer HBDV-II+Pro" equipped with a spindle CPE-41 (both manufactured by Brookfield Engineering). 2.5 g of a sample was placed in a cone supplied with the viscometer, and the viscosity when rotating the spindle for 30 seconds at a shear rate of $40s^{-1}$ and 25°C was measured. The viscosity measured in this manner was defined as the viscosity of the slurry. The decrease rate of the viscosity of the slurry after storage for 5 days at 25°C relative to the viscosity immediately after the preparation of the slurry was calculated and evaluated according to the following criteria. "A" and "B" were assessed as acceptable. The results are shown in Tables 1 to 6.

A: The decrease rate was less than 10%.
B: The decrease rate was not less than 10% and less than 15%.
C: The decrease rate was not less than 15%.

[Evaluation of Long-Term Storage Stability of pH of Slurries]

The pH of each of the slurries obtained was measured after storage for 3 days at 25°C and evaluated according to the following criteria. "A" and "B" were assessed as acceptable. The results are shown in Tables 1 to 6.

A: The pH was less than 10.0.
B: The pH was not less than 10.0 and less than 10.5.
C: The pH was not less than 10.5.

[Table 1]

| | | Production Example | A1 | A2 | A3 | A4 | A5 | A6 | A7 | A8 | A9 | A10 | A11 | A12 | A13 | A14 | A15 | A16 | A17 | A18 | A19 | A20 | A21 | A22 | A23 | A24 | A25 | A26 | A27 | A28 | A29 | A30 |
|---|---|---|---|---|---|---|---|---|---|---|---|---|---|---|---|---|---|---|---|---|---|---|---|---|---|---|---|---|---|---|---|---|
| Neutralizing dispersant | Neutralizer | Boric acid | ○ | ○ | ○ | ○ | ○ | ○ | ○ | ○ | ○ | ○ | | | | | | | | | | | | | | | | | | | | |
| | | Metaboric acid | | | | | | | | | | | ○ | ○ | ○ | ○ | ○ | ○ | ○ | ○ | ○ | ○ | | | | | | | | | | |
| | | Boron oxide + Al phosphate (weight ratio = 7 : 3) | | | | | | | | | | | | | | | | | | | | | ○ | ○ | ○ | ○ | ○ | ○ | ○ | ○ | ○ | ○ |
| | Dispersant | Carboxymethyl cellulose Na | ○ | | | | | | | | | | ○ | | | | | | | | | | ○ | | | | | | | | | |
| | | Carboxymethyl cellulose Mg | | ○ | | | | | | | | | | ○ | | | | | | | | | | ○ | | | | | | | | |
| | | Carboxymethyl cellulose Li | | | ○ | | | | | | | | | | ○ | | | | | | | | | | ○ | | | | | | | |
| | | Carboxymethyl cellulose K | | | | ○ | | | | | | | | | | ○ | | | | | | | | | | ○ | | | | | | |
| | | Carboxymethyl cellulose NH₄ | | | | | ○ | | | | | | | | | | ○ | | | | | | | | | | ○ | | | | | |
| | | Na alginate | | | | | | ○ | | | | | | | | | | ○ | | | | | | | | | | ○ | | | | |
| | | Alginic acid Mg | | | | | | | ○ | | | | | | | | | | ○ | | | | | | | | | | ○ | | | |
| | | Li alginate | | | | | | | | ○ | | | | | | | | | | ○ | | | | | | | | | | ○ | | |
| | | K alginate | | | | | | | | | ○ | | | | | | | | | | ○ | | | | | | | | | | ○ | |
| | | NH₄ alginate | | | | | | | | | | ○ | | | | | | | | | | ○ | | | | | | | | | | ○ |
| Positive electrode material | NMC622 | Storage stability of viscosity | A | A | A | A | A | A | A | A | A | A | A | A | A | A | A | A | A | A | A | A | A | A | A | A | A | A | A | A | A | A |
| | | Storage stability of pH | A | A | A | A | A | A | A | A | A | A | A | A | A | A | A | A | A | A | A | A | A | A | A | A | A | A | A | A | A | A |
| | NMC811 | Storage stability of viscosity | A | A | A | A | B | A | A | B | A | A | A | A | A | B | A | B | A | A | A | B | A | A | B | A | A | A | A | A | A | A |
| | | Storage stability of pH | A | A | B | A | B | A | A | A | A | B | A | A | A | B | B | B | A | B | B | B | A | A | B | A | B | A | A | A | A | A |
| | NCA | Storage stability of viscosity | A | A | A | A | A | A | A | B | A | B | B | A | A | A | A | A | A | B | A | A | A | A | A | A | A | A | A | B | A | A |
| | | Storage stability of pH | A | A | A | A | B | A | A | B | A | B | B | A | B | B | B | B | A | B | B | B | A | A | A | A | B | A | A | A | A | B |

[Table 2]

| | | Production Example | A31 | A32 | A33 | A34 | A35 | A36 | A37 | A38 |
|---|---|---|---|---|---|---|---|---|---|---|
| Neutralizing dispersant | Neutralizer | Boric acid + $Na_2B_4O_7$ (weight ratio = 0.7 : 1) | ○ | ○ | ○ | ○ | ○ | ○ | ○ | ○ |
| | Dispersant | Carboxymethyl cellulose Na | | | ○ | | | | | |
| | | Carboxymethyl cellulose Mg | | | | | | | | |
| | | Carboxymethyl cellulose Li | ○ | | | | ○ | | | |
| | | Carboxymethyl cellulose K | | | | | | | | |
| | | Carboxymethyl cellulose NH4 | | | | | | | | |
| | | Na alginate | | | | | | | ○ | |
| | | Alginic acid Mg | | ○ | | | | | | ○ |
| | | Li alginate | | | | | | ○ | | |
| | | K alginate | | | | | | | | |
| | | NH4 alginate | | | | | | | ○ | |
| | | Pullulan | | ○ | | | | | | |
| | | Guar gum | | | ○ | | | | | |
| | | Xanthan gum | | | | ○ | | | | |
| | Dispersant (auxiliary) | Methylcellulose | | | | | | ○ | | ○ |
| | | Carboxymethyl starch | | | | | | ○ | | |
| | | Carrageenan | | | | | | | ○ | |
| | Neutralizer (auxiliary) | 2Na phosphate | ○ | | | | | | | ○ |
| Positive electrode material | NMC622 | Storage stability of viscosity | A | A | A | A | A | A | A | A |
| | | Storage stability of pH | A | A | A | A | A | A | A | A |
| | NMC811 | Storage stability of viscosity | B | A | A | A | A | A | A | A |
| | | Storage stability of pH | A | B | B | B | B | B | B | A |
| | NCA | Storage stability of viscosity | A | A | A | A | B | A | A | A |
| | | Storage stability of pH | A | B | B | B | B | B | B | A |

[Table 3]

| | | Production Example | A 39 | A 40 | A 41 | A 42 | A 43 | A 44 | A 45 | A 46 | A 47 | A 48 | A 49 | A 50 | A 51 | A 52 | A 53 | A 54 | A 55 | A 56 | A 57 | A 58 | A 59 | A 60 | A 61 | A 62 | A 63 | A 64 | A 65 | A 66 | A 67 | A 68 | A 69 | A 70 |
|---|---|---|---|---|---|---|---|---|---|---|---|---|---|---|---|---|---|---|---|---|---|---|---|---|---|---|---|---|---|---|---|---|---|---|
| Neutralizing dispersant | Neutralizer | Boric acid + $Na_2B_4O_7$ (weight ratio = 0.7 : 1) | ○ | ○ | | | | | | | | | | | | | | | | | | | | | | | | | | | | | | |
| | | Boric acid + $Na_2B_4O_7$ (weight ratio = 0.86 : 1) | | | ○ | ○ | ○ | ○ | ○ | ○ | ○ | ○ | ○ | ○ | | | | | | | | | | | | | | | | | | | | |
| | | Boric acid + $Na_2B_4O_7$ (weight ratio = 1 : 1) | | | | | | | | | | | | | ○ | ○ | ○ | ○ | ○ | ○ | ○ | ○ | ○ | ○ | | | | | | | | | | |
| | | Boric acid + $Na_2B_4O_7$ (weight ratio = 1.2 : 1) | | | | | | | | | | | | | | | | | | | | | | | ○ | ○ | ○ | ○ | ○ | ○ | ○ | ○ | ○ | ○ |
| | Dispersant | Carboxymethyl cellulose Na | ○ | | | | | | | | | | | | ○ | | | | | | | | | | | | | | ○ | | | | | |
| | | Carboxymethyl cellulose Mg | | ○ | | | | | | | | | | | | ○ | | | | | | | | | | | | | | ○ | | | | |
| | | Carboxymethyl cellulose Li | | | ○ | | | | | | | | | | | | ○ | | | | | | | | | | | | | | ○ | | | |
| | | Carboxymethyl cellulose K | | | | ○ | | | | | | | | | | | | ○ | | | | | | | | | | | | | | ○ | | |
| | | Carboxymethyl cellulose $NH_4$ | | | | | ○ | | | | | | | | | | | | ○ | | | | | | | | | | | | | | ○ | |
| | | Na alginate | | | | | | ○ | | | | | | | | | | | | ○ | | | | | | | | | | | | | | ○ |
| | | Mg alginate | | | | | | | ○ | | | | | | | | | | | | ○ | | | | | | | | | | | | | |
| | | Li alginate | | | | | | | | ○ | | | | | | | | | | | | ○ | | | | | | | | | | | | |
| | | K alginate | | | | | | | | | ○ | | | | | | | | | | | | ○ | | | | | | | | | | | |
| | | $NH_4$ alginate | | | | | | | | | | ○ | | | | | | | | | | | | ○ | | | | | | | | | | |
| | | Pullulan | | | | | | | | | | | ○ | | | | | | | | | | | | ○ | | | | | | | | | |
| | | Guar gum | | | | | | | | | | | | ○ | | | | | | | | | | | | ○ | | | | | | | | |
| | | Xanthan gum | | | | | | | | | | | | | ○ | | | | | | | | | | | | ○ | | | | | | | |
| Positive electrode material | NMC 622 | Storage stability of viscosity | A | A | A | A | A | A | A | A | A | A | A | A | A | A | A | A | A | A | A | A | A | A | A | A | A | A | A | A | A | A | A | A |
| | | Storage stability of pH | A | A | A | A | A | A | A | A | A | A | A | A | A | A | A | A | A | A | A | A | A | A | A | A | A | A | A | A | A | A | A | A |
| | NMC 811 | Storage stability of viscosity | A | A | A | A | A | A | A | A | A | A | A | A | A | A | A | A | A | A | A | A | A | A | A | A | A | A | A | A | A | A | A | A |
| | | Storage stability of pH | B | B | B | B | B | B | B | B | B | B | B | B | A | A | A | A | A | A | A | A | A | A | A | A | A | A | A | A | A | A | A | A |
| | NCA | Storage stability of viscosity | A | A | A | A | A | A | A | B | A | A | A | A | A | A | A | A | A | A | A | A | B | A | A | A | A | A | A | A | A | A | A | A |
| | | Storage stability of pH | B | B | B | B | B | B | B | B | B | B | B | B | A | A | A | A | A | A | A | A | A | A | A | A | A | A | A | A | A | A | A | A |

EP 4 156 332 A1

19

## [Table 4]

| | | Production Example | C1 | C2 | C3 | C4 | C5 | C6 | C7 | C8 | C9 | C10 | C11 | C12 | C13 | C14 | C15 | C16 | C17 | C18 | C19 | C20 | C21 | C22 | C23 | C24 | C25 | C26 | C27 | C28 | C29 | C30 |
|---|---|---|---|---|---|---|---|---|---|---|---|---|---|---|---|---|---|---|---|---|---|---|---|---|---|---|---|---|---|---|---|
| Neutralizing dispersant | Neutralizer | Boric acid | ○ | ○ | ○ | ○ | ○ | ○ | ○ | ○ | ○ | ○ | | | | | | | | | | | | | | | | | | | | |
| | | Metaboric acid | | | | | | | | | | | ○ | ○ | ○ | ○ | ○ | ○ | ○ | ○ | ○ | ○ | | | | | | | | | | |
| | | Boron oxide + Al phosphate (weight ratio = 7 : 3) | | | | | | | | | | | | | | | | | | | | | ○ | ○ | ○ | ○ | ○ | ○ | ○ | ○ | ○ | ○ |
| | Dispersant | Carboxymethyl cellulose Na | ○ | | | | | | | | | | ○ | | | | | | | | | | ○ | | | | | | | | | |
| | | Carboxymethyl cellulose Mg | | ○ | | | | | | | | | | ○ | | | | | | | | | | ○ | | | | | | | | |
| | | Carboxymethyl cellulose Li | | | ○ | | | | | | | | | | ○ | | | | | | | | | | ○ | | | | | | | |
| | | Carboxymethyl cellulose K | | | | ○ | | | | | | | | | | ○ | | | | | | | | | | ○ | | | | | | |
| | | Carboxymethyl cellulose NH$_4$ | | | | | ○ | | | | | | | | | | ○ | | | | | | | | | | ○ | | | | | |
| | | Na alginate | | | | | | ○ | | | | | | | | | | ○ | | | | | | | | | | ○ | | | | |
| | | Mg alginate | | | | | | | ○ | | | | | | | | | | ○ | | | | | | | | | | ○ | | | |
| | | Li alginate | | | | | | | | ○ | | | | | | | | | | ○ | | | | | | | | | | ○ | | |
| | | K alginate | | | | | | | | | ○ | | | | | | | | | | ○ | | | | | | | | | | ○ | |
| | | NH$_4$ alginate | | | | | | | | | | ○ | | | | | | | | | | ○ | | | | | | | | | | ○ |
| Negative electrode material | SiOLi | Storage stability of viscosity | A | A | A | A | A | A | A | A | A | A | A | A | A | A | A | A | A | A | A | A | A | A | A | A | A | A | A | A | A | A |
| | | Storage stability of pH | A | A | A | A | A | A | A | A | A | A | A | A | A | A | A | A | A | A | A | A | A | A | A | A | A | A | A | A | A | A |
| | SiO | Storage stability of viscosity | A | A | A | A | A | A | A | A | A | A | A | A | A | A | A | A | A | A | A | A | A | A | A | A | A | A | A | A | A | A |
| | | Storage stability of pH | A | A | A | A | A | A | A | A | A | A | A | A | A | A | A | A | A | A | A | A | A | A | A | A | A | A | A | A | A | A |
| | LTO | Storage stability of viscosity | A | A | A | A | A | A | A | A | A | A | A | A | A | A | A | A | A | A | A | A | A | A | A | A | A | A | A | A | A | A |
| | | Storage stability of pH | A | A | A | A | A | A | A | A | A | A | A | A | A | A | A | A | A | A | A | A | A | A | A | A | A | A | A | A | A | A |

## [Table 4] Continued

| | Production Example | | C1 | C2 | C3 | C4 | C5 | C6 | C7 | C8 | C9 | C10 | C11 | C12 | C13 | C14 | C15 | C16 | C17 | C18 | C19 | C20 | C21 | C22 | C23 | C24 | C25 | C26 | C27 | C28 | C29 | C30 |
|---|---|---|---|---|---|---|---|---|---|---|---|---|---|---|---|---|---|---|---|---|---|---|---|---|---|---|---|---|---|---|---|
| Negative electrode material | LnbO + LTO (weight ratio = 9 : 1) | Storage stability of viscosity | A | A | A | A | A | A | A | A | A | A | A | A | A | A | A | A | A | A | A | A | A | A | A | A | A | A | A | A | A | A |
| | | Storage stability of pH | A | A | A | A | A | A | A | A | A | A | A | A | A | A | A | A | A | A | A | A | A | A | A | A | A | A | A | A | A | A |
| | LNbO + LTO (weight ratio = 8 : 2) | Storage stability of viscosity | A | A | A | A | A | A | A | A | A | A | A | A | A | A | A | A | A | A | A | A | A | A | A | A | A | A | A | A | A | A |
| | | Storage stability of pH | A | A | A | A | A | A | A | A | A | A | A | A | A | A | A | A | A | A | A | A | A | A | A | A | A | A | A | A | A | A |
| | LNbO + LTO (weight ratio = 7 : 3) | Storage stability of viscosity | A | A | A | A | A | A | A | A | A | A | A | A | A | A | A | A | A | A | A | A | A | A | A | A | A | A | A | A | A | A |
| | | Storage stability of pH | A | A | A | A | A | A | A | A | A | A | A | A | A | A | A | A | A | A | A | A | A | A | A | A | A | A | A | A | A | A |
| | LNbO + LTO (weight ratio = 6 : 4) | Storage stability of viscosity | A | A | A | A | A | A | A | A | A | A | A | A | A | A | A | A | A | A | A | A | A | A | A | A | A | A | A | A | A | A |
| | | Storage stability of pH | A | A | A | A | A | A | A | A | A | A | A | A | A | A | A | A | A | A | A | A | A | A | A | A | A | A | A | A | A | A |
| | LNbO + LTO (weight ratio = 5 : 5) | Storage stability of viscosity | A | A | A | A | A | A | A | A | A | A | A | A | A | A | A | A | A | A | A | A | A | A | A | A | A | A | A | A | A | A |
| | | Storage stability of pH | A | A | A | A | A | A | A | A | A | A | A | A | A | A | A | A | A | A | A | A | A | A | A | A | A | A | A | A | A | A |
| | LNbO + LTO (weight ratio = 4 : 6) | Storage stability of viscosity | A | A | A | A | A | A | A | A | A | A | A | A | A | A | A | A | A | A | A | A | A | A | A | A | A | A | A | A | A | A |
| | | Storage stability of pH | A | A | A | A | A | A | A | A | A | A | A | A | A | A | A | A | A | A | A | A | A | A | A | A | A | A | A | A | A | A |
| | LNbO + LTO (weight ratio = 3 : 7) | Storage stability of viscosity | A | A | A | A | A | A | A | A | A | A | A | A | A | A | A | A | A | A | A | A | A | A | A | A | A | A | A | A | A | A |
| | | Storage stability of pH | A | A | A | A | A | A | A | A | A | A | A | A | A | A | A | A | A | A | A | A | A | A | A | A | A | A | A | A | A | A |
| | LNbO + LTO (weight ratio = 2 : 8) | Storage stability of viscosity | A | A | A | A | A | A | A | A | A | A | A | A | A | A | A | A | A | A | A | A | A | A | A | A | A | A | A | A | A | A |
| | | Storage stability of pH | A | A | A | A | A | A | A | A | A | A | A | A | A | A | A | A | A | A | A | A | A | A | A | A | A | A | A | A | A | A |
| | LNbO + LTO (weight ratio = 1 : 9) | Storage stability of viscosity | A | A | A | A | A | A | A | A | A | A | A | A | A | A | A | A | A | A | A | A | A | A | A | A | A | A | A | A | A | A |
| | | Storage stability of pH | A | A | A | A | A | A | A | A | A | A | A | A | A | A | A | A | A | A | A | A | A | A | A | A | A | A | A | A | A | A |

## [Table 5]

| | | | Production Example | C 31 | C 32 | C 33 | C 34 | C 35 | C 36 | C 37 | C 38 |
|---|---|---|---|---|---|---|---|---|---|---|---|
| Neutralizing dispersant | | Neutralizer | Boric acid + Na$_2$B$_4$O$_7$ (weight ratio = 0.7 : 1) | ○ | ○ | ○ | ○ | ○ | ○ | ○ | ○ |
| | | Dispersant | Carboxymethyl cellulose Na | | | ○ | | | | | |
| | | | Carboxymethyl cellulose Mg | | | | | | | | |
| | | | Carboxymethyl cellulose Li | ○ | | | | ○ | | | |
| | | | Carboxymethyl cellulose K | | | | | | | | |
| | | | Carboxymethyl cellulose NH$_4$ | | | | | | | | |
| | | | Na alginate | | | | | | ○ | | |
| | | | Mg alginate | | | ○ | | | | | ○ |
| | | | Li alginate | | | | | | ○ | | |
| | | | K alginate | | | | | | | | |
| | | | NH$_4$ alginate | | | | | | | ○ | |
| | | | Pullulan | | | ○ | | | | | |
| | | | Guar gum | | | | ○ | | | | |
| | | | Xanthan gum | | | | | ○ | | | |
| | | Dispersant (auxiliary) | Methylcellulose | | | | | | ○ | | ○ |
| | | | Carboxymethyl starch | | | | | | ○ | | |
| | | | Carrageenan | | | | | | | ○ | |
| | | Neutralizer (auxiliary) | 2Na phosphate | ○ | | | | | | | ○ |
| | Negative electrode material | SiOLi | Storage stability of viscosity | A | A | A | A | A | A | A | A |
| | | | Storage stability of pH | A | B | B | A | A | A | A | A |
| | | SiO | Storage stability of viscosity | A | A | A | A | A | A | A | A |
| | | | Storage stability of pH | A | A | A | A | A | A | A | A |
| | | LTO | Storage stability of viscosity | A | A | A | A | A | A | A | A |
| | | | Storage stability of pH | A | A | A | A | A | A | A | A |
| | | LnbO + LTO (weight ratio = 9 : 1) | Storage stability of viscosity | A | A | A | A | A | A | A | A |
| | | | Storage stability of pH | A | A | A | A | A | A | A | A |
| | | LNbO + LTO (weight ratio = 8 : 2) | Storage stability of viscosity | A | A | A | A | A | A | A | A |
| | | | Storage stability of pH | A | A | A | A | A | A | A | A |
| | | LNbO + LTO (weight ratio = 7 : 3) | Storage stability of viscosity | A | A | A | A | A | A | A | A |
| | | | Storage stability of pH | A | A | A | A | A | A | A | A |
| | | LNbO + LTO (weight ratio = 6 : 4) | Storage stability of viscosity | A | A | A | A | A | A | A | A |
| | | | Storage stability of pH | A | A | A | A | A | A | A | A |
| | | LNbO + LTO (weight ratio = 5 : 5) | Storage stability of viscosity | A | A | A | A | A | A | A | A |
| | | | Storage stability of pH | A | A | A | A | A | A | A | A |
| | | LNbO + LTO (weight ratio = 4 : 6) | Storage stability of viscosity | A | A | A | A | A | A | A | A |
| | | | Storage stability of pH | A | A | A | A | A | A | A | A |
| | | LNbO + LTO (weight ratio = 3 : 7) | Storage stability of viscosity | A | A | A | A | A | A | A | A |
| | | | Storage stability of pH | A | A | A | A | A | A | A | A |
| | | LNbO + LTO (weight ratio = 2 : 8) | Storage stability of viscosity | A | A | A | A | A | A | A | A |
| | | | Storage stability of pH | A | A | A | A | A | A | A | A |
| | | LNbO + LTO (weight ratio = 1 : 9) | Storage stability of viscosity | A | A | A | A | A | A | A | A |
| | | | Storage stability of pH | A | A | A | A | A | A | A | A |

[Table 6]

| | | Production Example | C39 | C40 | C41 | C42 | C43 | C44 | C45 | C46 | C47 | C48 | C49 | C50 | C51 | C52 | C53 | C54 | C55 | C56 | C57 | C58 | C59 | C60 | C61 | C62 | C63 | C64 | C65 | C66 | C67 | C68 | C69 | C70 |
|---|---|---|---|---|---|---|---|---|---|---|---|---|---|---|---|---|---|---|---|---|---|---|---|---|---|---|---|---|---|---|---|---|---|---|
| Neutralizing dispersant | Neutralizer | Boric acid + $Na_2B_4O_7$ (weight ratio = 0.7 : 1) | ○ | ○ | | | | | | | | | | | | | | | | | | | | | | | | | | | | | | |
| | | Boric acid + $Na_2B_4O_7$ (weight ratio = 0.86 : 1) | | | ○ | ○ | ○ | ○ | ○ | ○ | ○ | ○ | ○ | ○ | | | | | | | | | | | | | | | | | | | | |
| | | Boric acid + $Na_2B_4O_7$ (weight ratio = 1 : 1) | | | | | | | | | | | | | ○ | ○ | ○ | ○ | ○ | ○ | ○ | ○ | ○ | ○ | | | | | | | | | | |
| | | Boric acid + $Na_2B_4O_7$ (weight ratio = 1.2 : 1) | | | | | | | | | | | | | | | | | | | | | | | ○ | ○ | ○ | ○ | ○ | ○ | ○ | ○ | ○ | ○ |
| | Dispersant | Carboxymethyl cellulose Na | ○ | | | | | | | | | | | | | ○ | | | | | | | | | | | | | ○ | | | | | |
| | | Carboxymethyl cellulose Mg | | ○ | | | | | | | | | | | | | ○ | | | | | | | | | | | | | ○ | | | | |
| | | Carboxymethyl cellulose Li | | | ○ | | | | | | | | | | | | | ○ | | | | | | | | | | | | | ○ | | | |
| | | Carboxymethyl cellulose K | | | | ○ | | | | | | | | | | | | | ○ | | | | | | | | | | | | | ○ | | |
| | | Carboxymethyl cellulose $NH_4$ | | | | | ○ | | | | | | | | | | | | | ○ | | | | | | | | | | | | | ○ | |
| | | Na alginate | | | | | | ○ | | | | | | | | | | | | | ○ | | | | | | | | | | | | | ○ |
| | | Mg alginate | | | | | | | ○ | | | | | | | | | | | | | ○ | | | | | | | | | | | | |
| | | Li alginate | | | | | | | | ○ | | | | | | | | | | | | | ○ | | | | | | | | | | | |
| | | K alginate | | | | | | | | | ○ | | | | | | | | | | | | | ○ | | | | | | | | | | |
| | | $NH_4$ alginate | | | | | | | | | | ○ | | | | | | | | | | | | | ○ | | | | | | | | | |
| | | Pullulan | | | | | | | | | | | ○ | | | | | | | | | | | | | ○ | | | | | | | | |
| | | Guar gum | | | | | | | | | | | | ○ | | | | | | | | | | | | | ○ | | | | | | | |
| | | Xanthan gum | | | | | | | | | | | | | ○ | | | | | | | | | | | | | ○ | | | | | | |
| Negative electrode material | SiOLi | Storage stability of viscosity | A | A | A | A | A | A | A | A | A | A | A | A | A | A | A | A | A | A | A | A | A | A | A | A | A | A | A | A | A | A | A | A |
| | | Storage stability of pH | B | B | A | A | A | A | A | A | A | A | A | A | A | A | A | A | A | A | A | A | A | A | A | A | A | A | A | A | A | A | A | A |
| | SiO | Storage stability of viscosity | A | A | A | A | A | A | A | A | A | A | A | A | A | A | A | A | A | A | A | A | A | A | A | A | A | A | A | A | A | A | A | A |
| | | Storage stability of pH | A | A | A | A | A | A | A | A | A | A | A | A | A | A | A | A | A | A | A | A | A | A | A | A | A | A | A | A | A | A | A | A |
| | LTO | Storage stability of viscosity | A | A | A | A | A | A | A | A | A | A | A | A | A | A | A | A | A | A | A | A | A | A | A | A | A | A | A | A | A | A | A | A |
| | | Storage stability of pH | A | A | A | A | A | A | A | A | A | A | A | A | A | A | A | A | A | A | A | A | A | A | A | A | A | A | A | A | A | A | A | A |

EP 4 156 332 A1

23

As can be seen from Tables 1 to 3, the positive electrode mixture slurries of Production Examples A1 to A70 all exhibited an acceptable level of viscosity storage stability and an acceptable level of pH storage stability, regardless

## [Table 6] Continued

| Production Example | | | C39 | C40 | C41 | C42 | C43 | C44 | C45 | C46 | C47 | C48 | C49 | C50 | C51 | C52 | C53 | C54 | C55 | C56 | C57 | C58 | C59 | C60 | C61 | C62 | C63 | C64 | C65 | C66 | C67 | C68 | C69 | C70 |
|---|---|---|---|---|---|---|---|---|---|---|---|---|---|---|---|---|---|---|---|---|---|---|---|---|---|---|---|---|---|---|---|---|---|
| Negative electrode material | LNbO + LTO (weight ratio = 9 : 1) | Storage stability of viscosity | A | A | A | A | A | A | A | A | A | A | A | A | A | A | A | A | A | A | A | A | A | A | A | A | A | A | A | A | A | A | A | A |
| | | Storage stability of pH | A | A | A | A | A | A | A | A | A | A | A | A | A | A | A | A | A | A | A | A | A | A | A | A | A | A | A | A | A | A | A | A |
| | LNbO + LTO (weight ratio = 8 : 2) | Storage stability of viscosity | A | A | A | A | A | A | A | A | A | A | A | A | A | A | A | A | A | A | A | A | A | A | A | A | A | A | A | A | A | A | A | A |
| | | Storage stability of pH | A | A | A | A | A | A | A | A | A | A | A | A | A | A | A | A | A | A | A | A | A | A | A | A | A | A | A | A | A | A | A | A |
| | LNbO + LTO (weight ratio = 7 : 3) | Storage stability of viscosity | A | A | A | A | A | A | A | A | A | A | A | A | A | A | A | A | A | A | A | A | A | A | A | A | A | A | A | A | A | A | A | A |
| | | Storage stability of pH | A | A | A | A | A | A | A | A | A | A | A | A | A | A | A | A | A | A | A | A | A | A | A | A | A | A | A | A | A | A | A | A |
| | LNbO + LTO (weight ratio = 6 : 4) | Storage stability of viscosity | A | A | A | A | A | A | A | A | A | A | A | A | A | A | A | A | A | A | A | A | A | A | A | A | A | A | A | A | A | A | A | A |
| | | Storage stability of pH | A | A | A | A | A | A | A | A | A | A | A | A | A | A | A | A | A | A | A | A | A | A | A | A | A | A | A | A | A | A | A | A |
| | LNbO + LTO (weight ratio = 5 : 5) | Storage stability of viscosity | A | A | A | A | A | A | A | A | A | A | A | A | A | A | A | A | A | A | A | A | A | A | A | A | A | A | A | A | A | A | A | A |
| | | Storage stability of pH | A | A | A | A | A | A | A | A | A | A | A | A | A | A | A | A | A | A | A | A | A | A | A | A | A | A | A | A | A | A | A | A |
| | LNbO + LTO (weight ratio = 4 : 6) | Storage stability of viscosity | A | A | A | A | A | A | A | A | A | A | A | A | A | A | A | A | A | A | A | A | A | A | A | A | A | A | A | A | A | A | A | A |
| | | Storage stability of pH | A | A | A | A | A | A | A | A | A | A | A | A | A | A | A | A | A | A | A | A | A | A | A | A | A | A | A | A | A | A | A | A |
| | LNbO + LTO (weight ratio = 3 : 7) | Storage stability of viscosity | A | A | A | A | A | A | A | A | A | A | A | A | A | A | A | A | A | A | A | A | A | A | A | A | A | A | A | A | A | A | A | A |
| | | Storage stability of pH | A | A | A | A | A | A | A | A | A | A | A | A | A | A | A | A | A | A | A | A | A | A | A | A | A | A | A | A | A | A | A | A |
| | LNbO + LTO (weight ratio = 2 : 8) | Storage stability of viscosity | A | A | A | A | A | A | A | A | A | A | A | A | A | A | A | A | A | A | A | A | A | A | A | A | A | A | A | A | A | A | A | A |
| | | Storage stability of pH | A | A | A | A | A | A | A | A | A | A | A | A | A | A | A | A | A | A | A | A | A | A | A | A | A | A | A | A | A | A | A | A |
| | LNbO + LTO (weight ratio = 1 : 9) | Storage stability of viscosity | A | A | A | A | A | A | A | A | A | A | A | A | A | A | A | A | A | A | A | A | A | A | A | A | A | A | A | A | A | A | A | A |
| | | Storage stability of pH | A | A | A | A | A | A | A | A | A | A | A | A | A | A | A | A | A | A | A | A | A | A | A | A | A | A | A | A | A | A | A | A |

24

of the type of positive electrode material used. Further, as can be seen from Tables 4 to 6, the negative electrode mixture slurries of Production Examples C1 to C70 all exhibited an acceptable level of viscosity storage stability and an acceptable level of pH storage stability, regardless of the type of negative electrode material used.

<Output Characteristics>

Positive electrode mixture slurries were each prepared by mixing 95 parts of NMC811 as a positive electrode material (complex oxide (A)), 2 parts of acetylene black as a conductive additive, 2 parts of a neutralizing dispersant shown in Table 7, and 1 part of an acrylic emulsion as a binder, then adding 25 parts of water thereto, and kneading the resulting mixture using a planetary mixer (TK HIVIS MIX, PRIMIX Corporation).

The thus-obtained positive electrode mixture slurry was applied in a strip-like shape by a doctor blade method to both surfaces of a 15 pm-thick long aluminum foil (positive electrode current collector) with the coating weight per surface being 12 mg/cm$^2$. The coating weight refers to the value based on the amount of the positive electrode active material. That is, the coating weight described above means that the slurry was applied such that 12 mg/cm$^2$ of the positive electrode active material was present on each surface. Thereafter, the aluminum foil coated with the positive electrode mixture slurry was dried at 100°C for 120 seconds, whereby a positive electrode mixture layer was formed. This positive electrode mixture layer was subjected to rolling with a roll press machine to adjust the positive electrode packing density to 3.0 g/cc. In this manner, positive electrodes for an electrochemical device according to Examples 1 to 4 and Comparative Example 1 were obtained.

Using the thus-obtained positive electrodes for an electrochemical device, lithium-ion secondary batteries used for evaluation of output characteristics and having the following structure were produced. Each of the above-described positive electrodes was cut into a size of 12 mmo, and a negative electrode was cut into a size of 13 mmo. Using a CR2032-type coin cell container, they were assembled in a glove box (dew point: -60°C, argon atmosphere). The materials used were as follows.

Positive electrode: each of the above-described positive electrodes for an electrochemical device
Negative electrode: metallic lithium
Electrolyte solution: a non-aqueous electrolyte solution prepared by dissolving a supporting electrolyte LiPF$_6$ at a concentration of 1.0 M in a mixed solvent containing ethylene carbonate (EC) and dimethyl carbonate (DMC) at a volume ratio of EC : DMC = 1 : 1 (this non-aqueous electrolyte solution is hereinafter indicated as "1.0 M LiPF$_6$ + EC/DMC = 1 : 1 (volume ratio)")
Vinylene carbonate (VC) was added thereto at a concentration of 2%. Separator: a porous film made of polyethylene

[Measurement Conditions]

First, each of the lithium-ion secondary batteries for evaluation of output characteristic was charged by a constant current-constant voltage (CC-CV) charging method. In the CV mode, charging was terminated when the current value reached one-tenth of the current value set in the CC mode. Next, for each of the batteries, a charge and discharge test was performed at a 10-hour rate (0.1C rate) in a voltage range of 3.0 to 4.3 V and at 25°C to measure the reference capacity, and then the discharge capacity was measured at a 1/3-hour rate (3C rate). The ratio of the capacity at the 3C rate to the capacity at the 0.1C rate was calculated and defined as the capacity retention. The thus-determined capacity retention was evaluated according to the following criteria. "A" was assessed as acceptable, and "B" and "C" were assessed as unacceptable. The results obtained are shown in Table 7.

A: The capacity retention was not less than 80%.
B: The capacity retention was not less than 70% and less than 80%.
C: The capacity retention was less than 70%.

[Table 7]

| | Neutralizing dispersant | | 0.1C rate (mAh/g) | 3C rate (mAh/g) | Capacity retention | Evaluation |
|---|---|---|---|---|---|---|
| | Neutralizer | Dispersant/ Dispersant (auxiliary) | | | | |
| Example 1 | Boric acid | CMC-Na | 195 | 160 | 82.1% | A |
| | 1.5 | 0.5 | | | | |

(continued)

| | Neutralizing dispersant | | 0.1C rate (mAh/g) | 3C rate (mAh/g) | Capacity retention | Evaluation |
| --- | --- | --- | --- | --- | --- | --- |
| | Neutralizer | Dispersant/ Dispersant (auxiliary) | | | | |
| Comparative Example 1 | Boric acid | PVP | 188 | 122 | 64.9% | C |
| | 1.5 | 0.5 | | | | |
| Example 2 | Boric acid | Alg-Na/PVP | 194 | 151 | 77.8% | B |
| | 1.5 | 0.3/0.2 | | | | |
| Example 3 | Boric acid | Alg-Mg/PVA | 180 | 123 | 68.3% | C |
| | 1.5 | 0.1/0.4 | | | | |
| Example 4 | Boric acid | Alg-Mg/CMC-Na | 197 | 162 | 82.2% | A |
| | 1.5 | 0.25/0.25 | | | | |

As can be seen from Table 7, Example 1 in which sodium carboxymethyl cellulose (CMC-Na) was used as the dispersant and Example 4 in which the mixture of CMC-Na and magnesium alginate (Alg-Mg) was used as the dispersant yielded good results with the capacity retention higher than 80%. In contrast, Comparative Example 1 in which only PVP, which is one of the above-described dispersants (auxiliary), was used as the dispersant exhibited a capacity retention of less than 70%. In the case where the dispersant Alg-Na or Alg-Mg was used in combination with PVP or PVA as the dispersant (auxiliary) (Examples 2 and 3), the capacity retention was improved as compared with the capacity retention in Comparative Example 1 in which only PVP was used. It should be noted here that, regarding the ratio between Alg-Mg and PVA, when the content of PVA was higher than the content of Alg-Mg as in Example 3, the capacity retention was improved as compared with the capacity retention in Comparative Example 1 but it was lower than 70%. These results indicate that it is preferable to add the dispersant (auxiliary) in an amount that does not exceed the content of the dispersant.

It can be seen that, in the present invention, water-soluble polymers (C) derived from natural products such as CMC-Na, Alg-Na, and Alg-Mg used as the dispersant together with the neutralizer contribute to the improvement in battery characteristics. Such an effect cannot be obtained when synthesized products such as PVA and PVP are used as the dispersant. Although the reason for this is not definite, it can be considered as follows. There is a possibility that, as compared with the natural products, the synthesized products may have a weaker affinity for metal oxides and substances that are more strongly alkaline in water. Thus, it is conceivable that some decomposition reaction is caused by long-term contact between the synthesized products with an electrode active material. Also, it is considered that, since the water-soluble polymers derived from natural products have properties such that they have higher thermal decomposition temperatures than the synthesized products and that they are less likely to be softened by heating, they contribute to good battery characteristics at high temperature.

<Cycle Characteristics at Room Temperature: 1A> Comparison with the case of solvent-based process

[Example 5: (aqueous) positive electrode mixture slurries]

Positive electrode mixture slurries were each prepared by mixing 95 parts of a positive electrode material (complex oxide (A)), 2 parts of acetylene black as a conductive additive, 2 parts of a neutralizing dispersant (boric acid : carboxymethyl cellulose sodium salt (CMC-Na) = 1.3 : 0.7) , and 1 part of an acrylic emulsion as a binder, then adding 25 parts of water thereto, and kneading the resulting mixture using a planetary mixer (TK HIVIS MIX, PRIMIX Corporation). As the positive electrode material, three types of materials, namely, NCA (lithium nickel-cobalt-aluminium oxide $LiNi_{0.8}Co_{0.15}Al_{0.05}O_2$), NMC622 ($LiNi_{0.6}CO_{0.2}Mn_{0.2}O_2$), and NMC811 ($LiNi_{0.8}Co_{0.1}Mn_{0.1}O_2$) were used.

[Comparative Example 2: (solvent-based) positive electrode mixture slurries]

Positive electrode mixture slurries were each prepared by mixing 95 parts of a positive electrode material (complex oxide (A)), 2 parts of acetylene black as a conductive additive, and 3 parts of polyvinylidene fluoride (EQ-Lib-PVdF, MTI), then adding 25 parts of N-methyl-2-pyrrolidone as a non-aqueous solvent thereto, and kneading the resulting mixture using a planetary mixer (TK HIVIS MIX, PRIMIX Corporation). As the positive electrode material, three types of materials, namely, NCA (lithium nickel-cobalt-aluminium oxide $LiNi_{0.8}Co_{0.15}Al_{0.05}O_2$), NMC622 ($LiNi_{0.6}CO_{0.2}Mn_{0.2}O_2$), and NMC811 ($LiNi_{0.8}Co_{0.1}Mn_{0.1}O_2$) were used.

The thus-obtained positive electrode mixture slurry was applied in a strip-like shape by a doctor blade method to both surfaces of a 15 pm-thick long aluminum foil (positive electrode current collector) with the coating weight per surface being 12 mg/cm$^2$. The coating weight refers to the value based on the amount of the positive electrode active material. That is, the coating weight described above means that the slurry was applied such that 12 mg/cm$^2$ of the positive electrode active material was present on each surface. Thereafter, the aluminum foil coated with the positive electrode mixture slurry was dried at 100°C for 120 seconds, whereby a positive electrode mixture layer was formed. This positive electrode mixture layer was subjected to rolling with a roll press machine to adjust the positive electrode packing density to 3.0 g/cc. In this manner, positive electrodes for an electrochemical device were obtained.

Using the thus-obtained positive electrodes for an electrochemical device, lithium-ion secondary batteries (for positive electrode evaluation) used for evaluation of cycle characteristics and having the following structure were produced. Each of the above-described positive electrodes was cut into a size of 12 mmo, and a negative electrode was cut into a size of 13 mmo. Using a CR2032-type coin cell container, they were assembled in a glove box (dew point: -60°C, argon atmosphere). The materials used were as follows. Positive electrode: each of the above-described positive electrodes for an electrochemical device

Negative electrode: metallic lithium

Electrolyte solution: 1.0 M$LiPF_6$ + EC/DMC = 1 : 1 (volume ratio)

1,3-propanesultone (PS) was added thereto at a concentration of 2%. Separator: a porous film made of polyethylene

[Measurement Conditions]

First, each of the lithium-ion secondary batteries for evaluation of cycle characteristics was charged by a constant current-constant voltage (CC-CV) charging method. In the CV mode, charging was terminated when the current value reached one-tenth of the current value set in the CC mode. Next, the batteries were discharged at a constant current at 25°C with the one-hour rate (1.0C rate) set to 200 mA when the positive electrode material was NCA, 190 mA when the positive electrode material was NMC622, and 200 mA when the positive electrode material was NMC811. The voltage range was 3.0 to 4.3 V With these steps as one cycle, the cycle was repeated to a total of 1000 cycles.

For each of the batteries, the capacity retention was calculated by substituting the discharge capacity value at the initial cycle and the discharge capacity value measured after 1000 cycles into the following equation. The results are shown in Table 8.

$$\text{Capacity retention (\%)} = (\text{Discharged capacity value after 1000 cycles})/(\text{Discharged capacity value at initial cycle}) \times 100 \ \dots \ (\text{Equation})$$

[Table 8]

| | Production process | Positive electrode material | Capacity retention after 1000 cycles |
|---|---|---|---|
| Example 5 | Aqueous (Boric acid + CMC-Na) | NCA | 91% |
| | | NMC622 | 93% |
| | | NMC811 | 90% |
| Comparative Example 2 | Solvent-based (PVdF) | NCA | 88% |
| | | NMC622 | 84% |
| | | NMC811 | 88% |

As can be seen from Table 8, the cycle characteristics obtained in Example 5 (aqueous) were superior to cycle characteristics obtained in Comparative Example 2 (solvent-based), regardless of the type of negative electrode material used.

<Cycle Characteristics at Room Temperature: 1C> Comparison with the case of solvent-based process

[Example 6: (aqueous) negative electrode mixture slurries]

Negative electrode mixture slurries were each prepared by mixing 95 parts of a negative electrode material (complex oxide (A)), 2 parts of acetylene black as a conductive additive, 2 parts of a neutralizing dispersant (boric acid : carboxymethyl cellulose sodium salt (CMC-Na) = 1.3 : 0.7) , and 1 part of an acrylic emulsion as a binder, then adding 25 parts of water thereto, and kneading the resulting mixture using a planetary mixer (TK HIVIS MIX, PRIMIX Corporation). As the negative electrode material, four types of materials, namely, SiO, SiOLi, LTO ($Li_4Ti_5O_{12}$), and LNO (lithium niobate $LiNbO_2$) were used.

[Comparative Example 3: (solvent-based) negative electrode mixture slurries]

Negative electrode mixture slurries were each prepared by mixing 95 parts of a negative electrode material (complex oxide (A)), 2 parts of acetylene black as a conductive additive, and 3 parts of polyvinylidene fluoride (EQ-Lib-PVdF, MTI), then adding 25 parts of N-methyl-2-pyrrolidone as a non-aqueous solvent thereto, and kneading the resulting mixture using a planetary mixer (TK HIVIS MIX, PRIMIX Corporation). As the negative electrode material, four types of materials, namely, SiO, SiOLi, LTO, and LNO were used.

The thus-obtained negative electrode mixture slurry was applied in a strip-like shape by a doctor blade method to both surfaces of a 15 pm-thick long negative electrode current collector. When SiO or SiOLi was used as the negative electrode material, a copper foil was used as the negative electrode current collector, and the negative electrode mixture slurry was applied such that the coating weight per surface was 3 mg/cm². When LTO or LNO was used as the negative electrode material, an aluminum foil was used as the negative electrode current collector, and the negative electrode mixture slurry was applied such that the coating weight per surface was 10 mg/cm². The coating weight refers to the value based on the amount of the negative electrode active material. That is, the coating weight described above means that the slurry was applied such that 3 mg/cm² or 10 mg/cm² of the negative electrode active material was present on each surface. Thereafter, the copper foil or aluminum foil coated with the negative electrode mixture slurry was dried at 100°C for 120 seconds, whereby a negative electrode mixture layer was formed. This negative electrode mixture layer was subjected to rolling with a roll press machine to adjust the negative electrode packing density to 1.5 g/cc. In this manner, negative electrodes for an electrochemical device were obtained.

Using the thus-obtained negative electrodes for an electrochemical device, lithium-ion secondary batteries (for negative electrode evaluation) used for evaluation of cycle characteristics and having the following structure were produced. Each of the above-described negative electrodes was cut into a size of 12 mmo, and a counter electrode was cut into a size of 13 mmo. Using a CR2032-type coin cell container, they were assembled in a glove box (dew point: -60°C, argon atmosphere). The materials used were as follows. Working electrode: each of the above-described negative electrode for an electrochemical device

   Counter electrode: metallic lithium
   Electrolyte solution: 1.0 $MLiPF_6$ + EC/DMC = 1 : 1 (volume ratio)
   Vinylene carbonate (VC) was added thereto at a concentration of 2%. Separator: a porous film made of polyethylene

[Measurement Conditions]

First, each of the lithium-ion secondary batteries for evaluation of cycle characteristics was charged by a constant current-constant voltage (CC-CV) charging method. In the CV mode, charging was terminated when the current value reached one-tenth of the current value set in the CC mode. Next, the batteries were discharged at a constant current at 25°C with the one-hour rate (1.0C rate) set to 450 mA when the negative electrode material was SiO, 400 mA when the negative electrode material was SiOLi, 170 mA when the negative electrode material was LTO, and 190 mA when the negative electrode material was LNO. The voltage range was 1.5 to 0.01 V when the negative electrode material was SiO or SiOLi, 2.5 to 1.0 V when the negative electrode material was LTO, and 2.5 to 1.3 V when the negative electrode material was LNO. With these steps as one cycle, the cycle was repeated to a total of 100 cycles.

For each of the batteries, the capacity retention was calculated by substituting the discharge capacity value at the initial cycle and the discharge capacity value measured after 1000 cycles into the following equation. The results are shown in Table 9.

$$\text{Capacity retention } (\%) = (\text{Discharged capacity value after } 100$$

$$\text{cycles})/(\text{Discharged capacity value at initial cycle}) \times 100 \ldots (\text{Equation})$$

[Table 9]

|  | Production process | Negative electrode material | Capacity retention after 100 cycles |
|---|---|---|---|
| Example 6 | Aqueous (Boric acid + CMC-Na) | SiO | 83% |
|  |  | SiOLi | 88% |
|  |  | LTO | 99% |
|  |  | LNO | 96% |
| Comparative Example 3 | Solvent-based (PVdF) | SiO | 47% |
|  |  | SiOLi | 49% |
|  |  | LTO | 97% |
|  |  | LNO | 90% |

As can be seen from Table 9, the cycle characteristics obtained in Example 6 (aqueous) were superior to cycle characteristics obtained in Comparative Example 3 (solvent-based), regardless of the type of negative electrode material used.

<Cycle Characteristics at High Temperature> Comparison with Solvent-Based Slurries

Cycle characteristics at high temperature were evaluated using lithium-ion batteries for evaluation of output characteristics, including the same positive electrodes for an electrochemical device as used for the above-described evaluation of cycle characteristics at room temperature. The measurement conditions were the same as those for the evaluation at room temperature, except that the temperature during measurement was set to 70°C. The results are shown in Table 10.

[Table 10]

|  | Production process | Positive electrode material | Capacity retention after 1000 cycles |
|---|---|---|---|
| Example 5 | Aqueous (Boric acid + CMC-Na) | NCA | 78% |
|  |  | NMC622 | 80% |
|  |  | NMC811 | 76% |
| Comparative Example 2 | Solvent-based (PVdF) | NCA | 67% |
|  |  | NMC622 | 75% |
|  |  | NMC811 | 60% |

As can be seen from Table 10, even in a high temperature (70°C) environment, the cycle characteristics obtained in Example 5 (aqueous) were superior to those in Comparative Example 2 (solvent-based), regardless of the type of positive electrode material used.

<Cycle Characteristics of Full Cells at Room Temperature and High Temperature> Comparison with the case of solvent-based process

In the same manner as in Example 5, aqueous positive electrode mixture slurries were prepared using positive electrode materials and neutralizing dispersants listed in Tables 11 to 19 and positive electrodes for an electrochemical device were obtained. The positive electrode materials used were as follows: NMC111 ($LiNi_{0.33}CO_{0.33}Mn_{0.33}O_2$),

NMC532 ($LiNi_{0.5}Co_{0.3}Mn_{0.2}O_2$), NMC622 ($LiNi_{0.6}CO_{0.2}Mn_{0.2}O_2$), NMC811 ($LiNi_{0.8}Co_{0.1}Mn_{0.1}O_2$), NCA (lithium nickel-cobalt-aluminium oxide $LiNi_{0.8}Co_{0.15}Al0_{.05}O_2$), LFP ($LiFePO_4$), LCO ($LiCoO_2$), LMO ($LiMn_2O_4$), and LNMO ($LiNi_{0.5}Mn_{1.5}O_4$. Further, in the same manner as in Example 6 (aqueous) and Comparative Example 3 (solvent-based), negative electrode mixture slurries were prepared using negative electrode materials listed in Tables 11 to 19 and negative electrodes for an electrochemical device were obtained. Using these positive electrodes and negative electrodes, lithium-ion secondary batteries (for full-cell evaluation) used for evaluation of cycle characteristics and having the following structure were produced. Positive electrode: each of the above-described positive electrodes for an electrochemical device

Negative electrode: each of the above-described negative electrode for an electrochemical device
Electrolyte solution: 1.0 $MLiPF_6$ + EC/DMC = 1 : 1 (volume ratio)

1, 3-propanesultone (PS) was added thereto at a concentration of 2%.
Vinylene carbonate (VC) was added thereto at a concentration of 0.8%.

Separator:

a porous film made of polyethylene, or
a cellulose non-woven fabric

When the negative electrode material was any of graphite, the respective types of "graphite + SiO", SiO, and SiOLi, a porous film made of polyethylene was used as the separator. When the negative electrode material was any of LTO, LNO, and the respective types of "LTO + LNO", a cellulose non-woven fabric was used as the separator.

[Measurement Conditions]

First, each of the lithium-ion secondary batteries for evaluation of cycle characteristics was charged by a constant current-constant voltage (CC-CV) charging method. In the CV mode, charging was terminated when the current value reached one-tenth of the current value set in the CC mode. Next, the batteries were discharged at a constant current at 25°C with the one-hour rate set as follows according to the positive electrode used therein: 200 mA when the positive electrode was NCA, 150 mA when the positive electrode was NMC111, 160 mA when the positive electrode was NMC532, 190 mA when the positive electrode was NMC622, 200 mA when the positive electrode was NMC811, 170 mA when the positive electrode was LFP, 130 mA when the positive electrode was LCO, 120 mA when the positive electrode was LMO, and 130 mA when the positive electrode was LNMO. The voltage range, which varies depending on the combination of the positive electrode material and the negative electrode material, was as shown in Table 11. With these steps as one cycle, the cycle was repeated to a total of 1000 cycles.

[Table 11]

| | | Negative electrode material | |
| --- | --- | --- | --- |
| | | G, SiO, SiOLi | LTO, LNO |
| Positive electrode material | Respective types of NMCs | 4.2 to 2.0V | 2.8 to 1.7V |
| | NCA | 4.2 to 2.0V | 2.8 to 2.0V |
| | LFP | 3.6 to 2.5V | 2.0 to 1.0V |
| | LCO | 4.2 to 2.0V | 2.8 to 1.7V |
| | LMO | 4.2 to 2.0V | 2.8 to 1.8V |
| | LNMO | 4.7 to 3.5V | 3.2 to 2.2V |

For each of the batteries, the capacity retention was calculated by substituting the discharge capacity value at the initial cycle and the discharge capacity value measured after 1000 cycles into the following equation. The results are shown in Tables 12 to 20.

$$\text{Capacity retention (\%)} = \text{(Discharged capacity value after 1000}$$

$$\text{cycles)/(Discharged capacity value at initial cycle)} \times 100 \ldots \text{(Equation)}$$

[Table 12]

| No. | Positive electrode material | Negative electrode material | Capacity retention at room temperature | | Capacity retention at 70°C | |
| --- | --- | --- | --- | --- | --- | --- |
| | | | Production process | | Production process | |
| | | | Aqueous | Solvent-based | Aqueous | Solvent-based |
| 1 | | Graphite | 93% | 88% | 90% | 73% |
| 2 | | Graphite + SiO (9.5 :0.5 weight ratio) | 93% | 80% | 90% | 64% |
| 3 | | Graphite + SiO (9 : 1 weight ratio) | 92% | 77% | 86% | 55% |
| 4 | | Graphite + SiO (8 : 2 weight ratio) | 92% | 62% | 84% | 40% or less |
| 5 | | Graphite + SiO (7 : 3 weight ratio) | 91% | 53% | 80% | 40% or less |
| 6 | | Graphite + SiO (6 : 4 weight ratio) | 91% | 44% | 80% | 40% or less |
| 7 | | Graphite + SiO (5 : 5 weight ratio) | 88% | 40% or less | 79% | 40% or less |
| 8 | | Graphite + SiO (4 : 6 weight ratio) | 87% | 40% or less | 75% | 40% or less |
| 9 | | Graphite + SiO (3 : 7 weight ratio) | 87% | 40% or less | 72% | 40% or less |
| 10 | | Graphite + SiO (2 : 8 weight ratio) | 84% | 40% or less | 71% | 40% or less |
| 11 | | Graphite + SiO (1 : 9 weight ratio) | 84% | 40% or less | 71% | 40% or less |
| 12 | | SiO | 80% | 40% or less | 70% | 40% or less |
| 13 | | Graphite + SiOLi (9.5 : 0.5 weight ratio) | 95% | 81% | 92% | 76% |
| 14 | | Graphite + SiOLi (9 : 1 weight ratio) | 95% | 77% | 92% | 67% |
| 15 | | Graphite + SiOLi (8 : 2 weight ratio) | 94% | 63% | 90% | 55% |
| 16 | | Graphite + SiOLi (7 : 3 weight ratio) | 94% | 56% | 90% | 40% or less |
| 17 | NMC111 (Boric acid + Metaboric acid + Alg-Mg + CMC-Mg) | Graphite + SiOLi (6 : 4 weight ratio) | 91% | 44% | 87% | 40% or less |

(continued)

| No. | Positive electrode material | Negative electrode material | Capacity retention at room temperature | | Capacity retention at 70°C | |
|---|---|---|---|---|---|---|
| | | | Production process | | Production process | |
| | | | Aqueous | Solvent-based | Aqueous | Solvent-based |
| 18 | | Graphite + SiOLi (5 : 5 weight ratio) | 91% | 40% or less | 86% | 40% or less |
| 19 | | Graphite + SiOLi (4 : 6 weight ratio) | 90% | 40% or less | 83% | 40% or less |
| 20 | | Graphite + SiOLi (3 : 7 weight ratio) | 90% | 40% or less | 83% | 40% or less |
| 21 | | Graphite + SiOLi (2 : 8 weight ratio) | 88% | 40% or less | 82% | 40% or less |
| 22 | | Graphite + SiOLi (1 : 9 weight ratio) | 86% | 40% or less | 80% | 40% or less |
| 23 | | SiOLi | 84% | 40% or less | 77% | 40% or less |
| 24 | | LTO | 99% | 94% | 97% | 88% |
| 25 | | LNO | 95% | 88% | 89% | 74% |
| 26 | | LTO + LNO (9 : 1 weight ratio) | 99% | 94% | 97% | 87% |
| 27 | | LTO + LNO (8 : 2 weight ratio) | 99% | 94% | 97% | 85% |
| 28 | | LTO + LNO (7 : 3 weight ratio) | 98% | 93% | 97% | 85% |
| 29 | | LTO + LNO (6 : 4 weight ratio) | 97% | 92% | 97% | 82% |
| 30 | | LTO + LNO (5 : 5 weight ratio) | 97% | 92% | 96% | 81% |
| 31 | | LTO + LNO (4 : 6 weight ratio) | 97% | 90% | 95% | 77% |
| 32 | | LTO + LNO (3 : 7 weight ratio) | 96% | 89% | 95% | 77% |
| 33 | | LTO + LNO (2 : 8 weight ratio) | 96% | 89% | 93% | 75% |
| 34 | | LTO + LNO (1 : 9 weight ratio) | 96% | 88% | 93% | 74% |

[Table 13]

| No. | Positive electrode material | Negative electrode material | Capacity retention at room temperature | | Capacity retention at 70°C | |
|---|---|---|---|---|---|---|
| | | | Production process | | Production process | |
| | | | Aqueous | Solvent-based | Aqueous | Solvent-based |
| 35 | | Graphite | 93% | 86% | 90% | 72% |
| 36 | | Graphite + SiO (9.5 :0.5 weight ratio) | 93% | 80% | 88% | 69% |
| 37 | | Graphite + SiO (9 : 1 weight ratio) | 91% | 76% | 86% | 40% or less |
| 38 | | Graphite + SiO (8 : 2 weight ratio) | 91% | 61% | 82% | 40% or less |
| 39 | | Graphite + SiO (7 : 3 weight ratio) | 91% | 50% | 80% | 40% or less |
| 40 | | Graphite + SiO (6 : 4 weight ratio) | 91% | 40% or less | 80% | 40% or less |
| 41 | | Graphite + SiO (5 : 5 weight ratio) | 87% | 40% or less | 77% | 40% or less |
| 42 | | Graphite + SiO (4 : 6 weight ratio) | 87% | 40% or less | 75% | 40% or less |
| 43 | | Graphite + SiO (3 : 7 weight ratio) | 87% | 40% or less | 72% | 40% or less |
| 44 | | Graphite + SiO (2 : 8 weight ratio) | 84% | 40% or less | 71% | 40% or less |
| 45 | | Graphite + SiO (1 : 9 weight ratio) | 83% | 40% or less | 71% | 40% or less |
| 46 | | SiO | 79% | 40% or less | 70% | 40% or less |
| 47 | | Graphite + SiOLi (9.5 : 0.5 weight ratio) | 94% | 81% | 90% | 72% |
| 48 | | Graphite + SiOLi (9 : 1 weight ratio) | 94% | 76% | 90% | 40% or less |
| 49 | | Graphite + SiOLi (8 : 2 weight ratio) | 94% | 63% | 90% | 40% or less |
| 50 | | Graphite + SiOLi (7 : 3 weight ratio) | 94% | 56% | 90% | 40% or less |
| 51 | NMC532 (Boric acid + CMC-Na) | Graphite + SiOLi (6 : 4 weight ratio) | 91% | 42% | 87% | 40% or less |
| 52 | | Graphite + SiOLi (5 : 5 weight ratio) | 91% | 40% or less | 86% | 40% or less |
| 53 | | Graphite + SiOLi (4 : 6 weight ratio) | 90% | 40% or less | 83% | 40% or less |
| 54 | | Graphite + SiOLi (3 : 7 weight ratio) | 90% | 40% or less | 83% | 40% or less |
| 55 | | Graphite + SiOLi (2 : 8 weight ratio) | 88% | 40% or less | 82% | 40% or less |

(continued)

| No. | Positive electrode material | Negative electrode material | Capacity retention at room temperature | | Capacity retention at 70°C | |
| --- | --- | --- | --- | --- | --- | --- |
| | | | Production process | | Production process | |
| | | | Aqueous | Solvent-based | Aqueous | Solvent-based |
| 56 | | Graphite + SiOLi (1 : 9 weight ratio) | 86% | 40% or less | 80% | 40% or less |
| 57 | | SiOLi | 84% | 40% or less | 77% | 40% or less |
| 58 | | LTO | 99% | 94% | 97% | 88% |
| 59 | | LNO | 95% | 88% | 90% | 74% |
| 60 | | LTO + LNO (9 : 1 weight ratio) | 99% | 94% | 97% | 87% |
| 61 | | LTO + LNO (8 : 2 weight ratio) | 99% | 94% | 97% | 85% |
| 62 | | LTO + LNO (7 : 3 weight ratio) | 98% | 93% | 97% | 85% |
| 63 | | LTO + LNO (6 : 4 weight ratio) | 97% | 92% | 97% | 82% |
| 64 | | LTO + LNO (5 : 5 weight ratio) | 97% | 92% | 96% | 81% |
| 65 | | LTO + LNO (4 : 6 weight ratio) | 97% | 90% | 95% | 77% |
| 66 | | LTO + LNO (3 : 7 weight ratio) | 96% | 89% | 95% | 77% |
| 67 | | LTO + LNO (2 : 8 weight ratio) | 96% | 88% | 93% | 75% |
| 68 | | LTO + LNO (1 : 9 weight ratio) | 95% | 88% | 92% | 71% |

[Table 14]

| No. | Positive electrode material | Negative electrode material | Capacity retention at room temperature | | Capacity retention at 70°C | |
| --- | --- | --- | --- | --- | --- | --- |
| | | | Production process | | Production process | |
| | | | Aqueous | Solvent-based | Aqueous | Solvent-based |
| 69 | | Graphite | 90% | 78% | 77% | 67% |
| 70 | | Graphite + SiO (9.5 : 0.5 weight ratio) | 87% | 74% | 75% | 59% |
| 71 | | Graphite + SiO (9 : 1 weight ratio) | 85% | 67% | 75% | 40% or less |
| 72 | | Graphite + SiO (8 : 2 weight ratio) | 85% | 61% | 73% | 40% or less |

(continued)

| No. | Positive electrode material | Negative electrode material | Capacity retention at room temperature | | Capacity retention at 70°C | |
|---|---|---|---|---|---|---|
| | | | Production process | | Production process | |
| | | | Aqueous | Solvent-based | Aqueous | Solvent-based |
| 73 | | Graphite + SiO (7 : 3 weight ratio) | 82% | 50% | 70% | 40% or less |
| 74 | | Graphite + SiO (6 : 4 weight ratio) | 80% | 40% or less | 69% | 40% or less |
| 75 | | Graphite + SiO (5 : 5 weight ratio) | 79% | 40% or less | 69% | 40% or less |
| 76 | | Graphite + SiO (4 : 6 weight ratio) | 79% | 40% or less | 66% | 40% or less |
| 77 | | Graphite + SiO (3 : 7 weight ratio) | 77% | 40% or less | 65% | 40% or less |
| 78 | | Graphite + SiO (2 : 8 weight ratio) | 77% | 40% or less | 65% | 40% or less |
| 79 | | Graphite + SiO (1 : 9 weight ratio) | 77% | 40% or less | 65% | 40% or less |
| 80 | | SiO | 75% | 40% or less | 63% | 40% or less |
| 81 | | Graphite + SiOLi (9.5 : 0.5 weight ratio) | 92% | 79% | 88% | 69% |
| 82 | | Graphite + SiOLi (9 : 1 weight ratio) | 90% | 71% | 85% | 40% or less |
| 83 | | Graphite + SiOLi (8 : 2 weight ratio) | 90% | 60% | 85% | 40% or less |
| 84 | | Graphite + SiOLi (7 : 3 weight ratio) | 89% | 49% | 82% | 40% or less |
| 85 | NMC622 (Boric acid + CMC-Na) | Graphite + SiOLi (6 : 4 weight ratio) | 89% | 40% or less | 81% | 40% or less |
| 86 | | Graphite + SiOLi (5 : 5 weight ratio) | 87% | 40% or less | 80% | 40% or less |
| 87 | | Graphite + SiOLi (4 : 6 weight ratio) | 86% | 40% or less | 78% | 40% or less |
| 88 | | Graphite + SiOLi (3 : 7 weight ratio) | 86% | 40% or less | 77% | 40% or less |
| 89 | | Graphite + SiOLi (2 : 8 weight ratio) | 84% | 40% or less | 75% | 40% or less |
| 90 | | Graphite + SiOLi (1 : 9 weight ratio) | 82% | 40% or less | 75% | 40% or less |
| 91 | | SiOLi | 82% | 40% or less | 73% | 40% or less |
| 92 | | LTO | 98% | 92% | 95% | 87% |
| 93 | | LNO | 97% | 91% | 95% | 85% |

(continued)

| No. | Positive electrode material | Negative electrode material | Capacity retention at room temperature | | Capacity retention at 70°C | |
| --- | --- | --- | --- | --- | --- | --- |
| | | | Production process | | Production process | |
| | | | Aqueous | Solvent-based | Aqueous | Solvent-based |
| 94 | | LTO + LNO (9 : 1 weight ratio) | 97% | 91% | 95% | 83% |
| 95 | | LTO + LNO (8 : 2 weight ratio) | 97% | 90% | 95% | 81% |
| 96 | | LTO + LNO (7 : 3 weight ratio) | 97% | 90% | 94% | 79% |
| 97 | | LTO + LNO (6 : 4 weight ratio) | 96% | 90% | 94% | 79% |
| 98 | | LTO + LNO (5 : 5 weight ratio) | 96% | 89% | 94% | 76% |
| 99 | | LTO + LNO (4 : 6 weight ratio) | 96% | 89% | 94% | 74% |
| 100 | | LTO + LNO (3 : 7 weight ratio) | 95% | 87% | 92% | 74% |
| 101 | | LTO + LNO (2 : 8 weight ratio) | 95% | 87% | 92% | 71% |
| 102 | | LTO + LNO (1 : 9 weight ratio) | 94% | 86% | 91% | 70% |

[Table 15]

| No. | Positive electrode material | Negative electrode material | Capacity retention at room temperature | | Capacity retention at 70°C | |
| --- | --- | --- | --- | --- | --- | --- |
| | | | Production process | | Production process | |
| | | | Aqueous | Solvent-based | Aqueous | Solvent-based |
| 103 | | Graphite | 84% | 73% | 72% | 55% |
| 104 | | Graphite + SiO (9.5 :0.5 weight ratio) | 80% | 71% | 70% | 45% |
| 105 | | Graphite + SiO (9 : 1 weight ratio) | 79% | 68% | 68% | 40% or less |
| 106 | | Graphite + SiO (8 : 2 weight ratio) | 77% | 60% | 66% | 40% or less |
| 107 | | Graphite + SiO (7 : 3 weight ratio) | 77% | 51% | 66% | 40% or less |
| 108 | | Graphite + SiO (6 : 4 weight ratio) | 76% | 40% or less | 66% | 40% or less |
| 109 | | Graphite + SiO (5 : 5 weight ratio) | 76% | 40% or less | 64% | 40% or less |

(continued)

| No. | Positive electrode material | Negative electrode material | Capacity retention at room temperature | | Capacity retention at 70°C | |
|---|---|---|---|---|---|---|
| | | | Production process | | Production process | |
| | | | Aqueous | Solvent-based | Aqueous | Solvent-based |
| 110 | NMC811 (Boric acid + Na$_2$B$_4$O$_7$ (weight ratio = 1.2 : 1) + CMC-K) | Graphite + SiO (4 : 6 weight ratio) | 74% | 40% or less | 64% | 40% or less |
| 111 | | Graphite + SiO (3 : 7 weight ratio) | 73% | 40% or less | 62% | 40% or less |
| 112 | | Graphite + SiO (2 : 8 weight ratio) | 73% | 40% or less | 61% | 40% or less |
| 113 | | Graphite + SiO (1 : 9 weight ratio) | 72% | 40% or less | 60% | 40% or less |
| 114 | | SiO | 70% | 40% or less | 60% | 40% or less |
| 115 | | Graphite + SiOLi (9.5 : 0.5 weight ratio) | 88% | 74% | 83% | 59% |
| 116 | | Graphite + SiOLi (9 : 1 weight ratio) | 87% | 69% | 81% | 40% or less |
| 117 | | Graphite + SiOLi (8 : 2 weight ratio) | 87% | 57% | 81% | 40% or less |
| 118 | | Graphite + SiOLi (7 : 3 weight ratio) | 85% | 45% | 80% | 40% or less |
| 119 | | Graphite + SiOLi (6 : 4 weight ratio) | 85% | 40% or less | 79% | 40% or less |
| 120 | | Graphite + SiOLi (5 : 5 weight ratio) | 84% | 40% or less | 79% | 40% or less |
| 121 | | Graphite + SiOLi (4 : 6 weight ratio) | 82% | 40% or less | 77% | 40% or less |
| 122 | | Graphite + SiOLi (3 : 7 weight ratio) | 80% | 40% or less | 75% | 40% or less |
| 123 | | Graphite + SiOLi (2 : 8 weight ratio) | 80% | 40% or less | 73% | 40% or less |
| 124 | | Graphite + SiOLi (1 : 9 weight ratio) | 77% | 40% or less | 73% | 40% or less |
| 125 | | SiOLi | 76% | 40% or less | 70% | 40% or less |
| 126 | | LTO | 98% | 91% | 93% | 82% |
| 127 | | LNO | 97% | 90% | 93% | 80% |
| 128 | | LTO + LNO (9 : 1 weight ratio) | 97% | 88% | 92% | 78% |
| 129 | | LTO + LNO (8 : 2 weight ratio) | 97% | 88% | 92% | 78% |

(continued)

| No. | Positive electrode material | Negative electrode material | Capacity retention at room temperature | | Capacity retention at 70°C | |
|---|---|---|---|---|---|---|
| | | | Production process | | Production process | |
| | | | Aqueous | Solvent-based | Aqueous | Solvent-based |
| 130 | | LTO + LNO (7 : 3 weight ratio) | 96% | 87% | 92% | 76% |
| 131 | | LTO + LNO (6 : 4 weight ratio) | 96% | 86% | 91% | 75% |
| 132 | | LTO + LNO (5 : 5 weight ratio) | 95% | 85% | 90% | 73% |
| 133 | | LTO + LNO (4 : 6 weight ratio) | 93% | 85% | 90% | 72% |
| 134 | | LTO + LNO (3 : 7 weight ratio) | 93% | 85% | 89% | 69% |
| 135 | | LTO + LNO (2 : 8 weight ratio) | 92% | 83% | 88% | 68% |
| 136 | | LTO + LNO (1 : 9 weight ratio) | 91% | 83% | 88% | 66% |

[Table 16]

| No. | Positive electrode material | Negative electrode material | Capacity retention at room temperature | | Capacity retention at 70°C | |
|---|---|---|---|---|---|---|
| | | | Production process | | Production process | |
| | | | Aqueous | Solvent-based | Aqueous | Solvent-based |
| 137 | | Graphite | 85% | 75% | 73% | 57% |
| 138 | | Graphite + SiO (9.5 : 0.5 weight ratio) | 82% | 73% | 71% | 50% |
| 139 | | Graphite + SiO (9 : 1 weight ratio) | 81% | 69% | 70% | 40% or less |
| 140 | | Graphite + SiO (8 : 2 weight ratio) | 81% | 62% | 69% | 40% or less |
| 141 | | Graphite + SiO (7 : 3 weight ratio) | 79% | 52% | 69% | 40% or less |
| 142 | | Graphite + SiO (6 : 4 weight ratio) | 76% | 40% or less | 68% | 40% or less |
| 143 | | Graphite + SiO (5 : 5 weight ratio) | 76% | 40% or less | 68% | 40% or less |
| 144 | | Graphite + SiO (4 : 6 weight ratio) | 74% | 40% or less | 67% | 40% or less |
| 145 | | Graphite + SiO (3 : 7 weight ratio) | 74% | 40% or less | 64% | 40% or less |
| 146 | | Graphite + SiO (2 : 8 weight ratio) | 73% | 40% or less | 64% | 40% or less |

(continued)

| No. | Positive electrode material | Negative electrode material | Capacity retention at room temperature | | Capacity retention at 70°C | |
| --- | --- | --- | --- | --- | --- | --- |
| | | | Production process | | Production process | |
| | | | Aqueous | Solvent-based | Aqueous | Solvent-based |
| 147 | NCA (Boric acid + CMC-Na) | Graphite + SiO (1 : 9 weight ratio) | 73% | 40% or less | 63% | 40% or less |
| 148 | | SiO | 73% | 40% or less | 63% | 40% or less |
| 149 | | Graphite + SiOLi (9.5 : 0.5 weight ratio) | 90% | 76% | 85% | 61% |
| 150 | | Graphite + SiOLi (9 : 1 weight ratio) | 89% | 73% | 84% | 40% or less |
| 151 | | Graphite + SiOLi (8 : 2 weight ratio) | 89% | 70% | 84% | 40% or less |
| 152 | | Graphite + SiOLi (7 : 3 weight ratio) | 88% | 58% | 82% | 40% or less |
| 153 | | Graphite + SiOLi (6 : 4 weight ratio) | 87% | 45% | 80% | 40% or less |
| 154 | | Graphite + SiOLi (5 : 5 weight ratio) | 85% | 40% or less | 79% | 40% or less |
| 155 | | Graphite + SiOLi (4 : 6 weight ratio) | 83% | 40% or less | 79% | 40% or less |
| 156 | | Graphite + SiOLi (3 : 7 weight ratio) | 82% | 40% or less | 77% | 40% or less |
| 157 | | Graphite + SiOLi (2 : 8 weight ratio) | 82% | 40% or less | 75% | 40% or less |
| 158 | | Graphite + SiOLi (1 : 9 weight ratio) | 80% | 40% or less | 74% | 40% or less |
| 159 | | SiOLi | 79% | 40% or less | 72% | 40% or less |
| 160 | | LTO | 98% | 92% | 93% | 84% |
| 161 | | LNO | 97% | 90% | 93% | 83% |
| 162 | | LTO + LNO (9 : 1 weight ratio) | 97% | 88% | 93% | 82% |
| 163 | | LTO + LNO (8 : 2 weight ratio) | 97% | 88% | 92% | 80% |
| 164 | | LTO + LNO (7 : 3 weight ratio) | 96% | 87% | 92% | 77% |
| 165 | | LTO + LNO (6 : 4 weight ratio) | 96% | 86% | 92% | 75% |
| 166 | | LTO + LNO (5 : 5 weight ratio) | 95% | 85% | 91% | 73% |
| 167 | | LTO + LNO (4 : 6 weight ratio) | 93% | 85% | 91% | 73% |

(continued)

| No. | Positive electrode material | Negative electrode material | Capacity retention at room temperature | | Capacity retention at 70°C | |
|---|---|---|---|---|---|---|
| | | | Production process | | Production process | |
| | | | Aqueous | Solvent-based | Aqueous | Solvent-based |
| 168 | | LTO + LNO (3 : 7 weight ratio) | 93% | 85% | 91% | 70% |
| 169 | | LTO + LNO (2 : 8 weight ratio) | 92% | 84% | 90% | 70% |
| 170 | | LTO + LNO (1 : 9 weight ratio) | 92% | 84% | 90% | 68% |

[Table 17]

| No. | Positive electrode material | Negative electrode material | Capacity retention at room temperature | | Capacity retention at 70°C | |
|---|---|---|---|---|---|---|
| | | | Production process | | Production process | |
| | | | Aqueous | Solvent-based | Aqueous | Solvent-based |
| 171 | | Graphite | 96% | 90% | 92% | 84% |
| 172 | | Graphite + SiO (9.5 : 0.5 weight ratio) | 96% | 87% | 92% | 73% |
| 173 | | Graphite + SiO (9 : 1 weight ratio) | 95% | 83% | 91% | 59% |
| 174 | | Graphite + SiO (8 : 2 weight ratio) | 95% | 76% | 91% | 41% |
| 175 | | Graphite + SiO (7 : 3 weight ratio) | 92% | 70% | 88% | 40% or less |
| 176 | | Graphite + SiO (6 : 4 weight ratio) | 92% | 62% | 87% | 40% or less |
| 177 | | Graphite + SiO (5 : 5 weight ratio) | 90% | 49% | 85% | 40% or less |
| 178 | | Graphite + SiO (4 : 6 weight ratio) | 89% | 40% or less | 84% | 40% or less |
| 179 | | Graphite + SiO (3 : 7 weight ratio) | 87% | 40% or less | 83% | 40% or less |
| 180 | | Graphite + SiO (2 : 8 weight ratio) | 86% | 40% or less | 83% | 40% or less |
| 181 | | Graphite + SiO (1 : 9 weight ratio) | 86% | 40% or less | 82% | 40% or less |
| 182 | | SiO | 85% | 40% or less | 81% | 40% or less |
| 183 | | Graphite + SiOLi (9.5 : 0.5 weight ratio) | 96% | 85% | 94% | 80% |
| 184 | | Graphite + SiOLi (9 : 1 weight ratio) | 96% | 82% | 93% | 74% |

(continued)

| No. | Positive electrode material | Negative electrode material | Capacity retention at room temperature | | Capacity retention at 70°C | |
|---|---|---|---|---|---|---|
| | | | Production process | | Production process | |
| | | | Aqueous | Solvent-based | Aqueous | Solvent-based |
| 185 | LFP (Metaboric acid + AlgNa/CMC-Na) | Graphite + SiOLi (8 : 2 weight ratio) | 95% | 76% | 93% | 61% |
| 186 | | Graphite + SiOLi (7 : 3 weight ratio) | 95% | 65% | 92% | 45% |
| 187 | | Graphite + SiOLi (6 : 4 weight ratio) | 94% | 49% | 91% | 40% or less |
| 188 | | Graphite + SiOLi (5 : 5 weight ratio) | 94% | 41% | 89% | 40% or less |
| 189 | | Graphite + SiOLi (4 : 6 weight ratio) | 94% | 40% or less | 87% | 40% or less |
| 190 | | Graphite + SiOLi (3 : 7 weight ratio) | 93% | 40% or less | 85% | 40% or less |
| 191 | | Graphite + SiOLi (2 : 8 weight ratio) | 93% | 40% or less | 85% | 40% or less |
| 192 | | Graphite + SiOLi (1 : 9 weight ratio) | 91% | 40% or less | 83% | 40% or less |
| 193 | | SiOLi | 89% | 40% or less | 82% | 40% or less |
| 194 | | LTO | 99% | 94% | 97% | 88% |
| 195 | | LNO | 95% | 92% | 90% | 76% |
| 196 | | LTO + LNO (9 : 1 weight ratio) | 99% | 94% | 97% | 88% |
| 197 | | LTO + LNO (8 : 2 weight ratio) | 99% | 94% | 97% | 86% |
| 198 | | LTO + LNO (7 : 3 weight ratio) | 99% | 93% | 97% | 83% |
| 199 | | LTO + LNO (6 : 4 weight ratio) | 98% | 93% | 97% | 83% |
| 200 | | LTO + LNO (5 : 5 weight ratio) | 98% | 92% | 97% | 82% |
| 201 | | LTO + LNO (4 : 6 weight ratio) | 97% | 92% | 96% | 80% |
| 202 | | LTO + LNO (3 : 7 weight ratio) | 97% | 92% | 95% | 78% |
| 203 | | LTO + LNO (2 : 8 weight ratio) | 97% | 92% | 95% | 77% |
| 204 | | LTO + LNO (1 : 9 weight ratio) | 96% | 92% | 94% | 76% |

[Table 18]

| No. | Positive electrode material | Negative electrode material | Capacity retention at room temperature | | Capacity retention at 70°C | |
|---|---|---|---|---|---|---|
| | | | Production process | | Production process | |
| | | | Aqueous | Solvent-based | Aqueous | Solvent-based |
| 205 | | Graphite | 94% | 92% | 91% | 75% |
| 206 | | Graphite + SiO (9.5 : 0.5 weight ratio) | 94% | 85% | 90% | 66% |
| 207 | | Graphite + SiO (9 : 1 weight ratio) | 93% | 79% | 88% | 56% |
| 208 | | Graphite + SiO (8 : 2 weight ratio) | 93% | 65% | 85% | 40% or less |
| 209 | | Graphite + SiO (7 : 3 weight ratio) | 92% | 56% | 82% | 40% or less |
| 210 | | Graphite + SiO (6 : 4 weight ratio) | 91% | 45% | 81% | 40% or less |
| 211 | | Graphite + SiO (5 : 5 weight ratio) | 90% | 40% or less | 80% | 40% or less |
| 212 | | Graphite + SiO (4 : 6 weight ratio) | 88% | 40% or less | 76% | 40% or less |
| 213 | | Graphite + SiO (3 : 7 weight ratio) | 88% | 40% or less | 75% | 40% or less |
| 214 | | Graphite + SiO (2 : 8 weight ratio) | 87% | 40% or less | 74% | 40% or less |
| 215 | | Graphite + SiO (1 : 9 weight ratio) | 85% | 40% or less | 73% | 40% or less |
| 216 | | SiO | 82% | 40% or less | 72% | 40% or less |
| 217 | | Graphite + SiOLi (9.5 : 0.5 weight ratio) | 95% | 86% | 93% | 78% |
| 218 | | Graphite + SiOLi (9 : 1 weight ratio) | 95% | 80% | 92% | 68% |
| 219 | | Graphite + SiOLi (8 : 2 weight ratio) | 95% | 68% | 89% | 59% |
| 220 | | Graphite + SiOLi (7 : 3 weight ratio) | 94% | 59% | 89% | 41% |
| 221 | LCO (Boric acid + $Na_2B_4O_7$ (weight ratio = 0.7 : 1) + Alg-Li) | Graphite + SiOLi (6 : 4 weight ratio) | 94% | 47% | 85% | 40% or less |
| 222 | | Graphite + SiOLi (5 : 5 weight ratio) | 93% | 40% or less | 84% | 40% or less |
| 223 | | Graphite + SiOLi (4 : 6 weight ratio) | 92% | 40% or less | 81% | 40% or less |
| 224 | | Graphite + SiOLi (3 : 7 weight ratio) | 91% | 40% or less | 80% | 40% or less |

(continued)

| No. | Positive electrode material | Negative electrode material | Capacity retention at room temperature | | Capacity retention at 70°C | |
|---|---|---|---|---|---|---|
| | | | Production process | | Production process | |
| | | | Aqueous | Solvent-based | Aqueous | Solvent-based |
| 225 | | Graphite + SiOLi (2 : 8 weight ratio) | 90% | 40% or less | 80% | 40% or less |
| 226 | | Graphite + SiOLi (1 : 9 weight ratio) | 88% | 40% or less | 79% | 40% or less |
| 227 | | SiOLi | 87% | 40% or less | 78% | 40% or less |
| 228 | | LTO | 99% | 94% | 97% | 88% |
| 229 | | LNO | 96% | 88% | 90% | 74% |
| 230 | | LTO + LNO (9 : 1 weight ratio) | 99% | 94% | 97% | 87% |
| 231 | | LTO + LNO (8 : 2 weight ratio) | 99% | 94% | 97% | 85% |
| 232 | | LTO + LNO (7 : 3 weight ratio) | 98% | 93% | 97% | 85% |
| 233 | | LTO + LNO (6 : 4 weight ratio) | 98% | 92% | 97% | 83% |
| 234 | | LTO + LNO (5 : 5 weight ratio) | 97% | 92% | 96% | 82% |
| 235 | | LTO + LNO (4 : 6 weight ratio) | 97% | 91% | 96% | 80% |
| 236 | | LTO + LNO (3 : 7 weight ratio) | 97% | 89% | 95% | 79% |
| 237 | | LTO + LNO (2 : 8 weight ratio) | 96% | 89% | 93% | 77% |
| 238 | | LTO + LNO (1 : 9 weight ratio) | 96% | 89% | 93% | 76% |

[Table 19]

| No. | Positive electrode material | Negative electrode material | Capacity retention at room temperature | | Capacity retention at 70°C | |
|---|---|---|---|---|---|---|
| | | | Production process | | Production process | |
| | | | Aqueous | Solvent-based | Aqueous | Solvent-based |
| 239 | | Graphite | 91% | 86% | 81% | 66% |
| 240 | | Graphite + SiO (9.5 : 0.5 weight ratio) | 89% | 79% | 76% | 43% |

(continued)

| No. | Positive electrode material | Negative electrode material | Capacity retention at room temperature | | Capacity retention at 70°C | |
|---|---|---|---|---|---|---|
| | | | Production process | | Production process | |
| | | | Aqueous | Solvent-based | Aqueous | Solvent-based |
| 241 | | Graphite + SiO (9 : 1 weight ratio) | 87% | 64% | 74% | 40% or less |
| 242 | | Graphite + SiO (8 : 2 weight ratio) | 85% | 51% | 73% | 40% or less |
| 243 | | Graphite + SiO (7 : 3 weight ratio) | 85% | 40% or less | 73% | 40% or less |
| 244 | | Graphite + SiO (6 : 4 weight ratio) | 84% | 40% or less | 69% | 40% or less |
| 245 | | Graphite + SiO (5 : 5 weight ratio) | 84% | 40% or less | 68% | 40% or less |
| 246 | | Graphite + SiO (4 : 6 weight ratio) | 84% | 40% or less | 65% | 40% or less |
| 247 | | Graphite + SiO (3 : 7 weight ratio) | 82% | 40% or less | 64% | 40% or less |
| 248 | | Graphite + SiO (2 : 8 weight ratio) | 81% | 40% or less | 64% | 40% or less |
| 249 | | Graphite + SiO (1 : 9 weight ratio) | 79% | 40% or less | 62% | 40% or less |
| 250 | | SiO | 79% | 40% or less | 62% | 40% or less |
| 251 | | Graphite + SiOLi (9.5 : 0.5 weight ratio) | 91% | 83% | 79% | 48% |
| 252 | | Graphite + SiOLi (9 : 1 weight ratio) | 90% | 69% | 77% | 40% or less |
| 253 | | Graphite + SiOLi (8 : 2 weight ratio) | 88% | 56% | 75% | 40% or less |
| 254 | | Graphite + SiOLi (7 : 3 weight ratio) | 88% | 47% | 74% | 40% or less |

(continued)

| No. | Positive electrode material | Negative electrode material | Capacity retention at room temperature | | Capacity retention at 70°C | |
|---|---|---|---|---|---|---|
| | | | Production process | | Production process | |
| | | | Aqueous | Solvent-based | Aqueous | Solvent-based |
| 255 | LMO (Boron oxide + Al phosphate (weight ratio = 7 : 3) + Carrageenan/Alg-Na) | Graphite + SiOLi (6 : 4 weight ratio) | 87% | 40% or less | 74% | 40% or less |
| 256 | | Graphite + SiOLi (5 : 5 weight ratio) | 86% | 40% or less | 73% | 40% or less |
| 257 | | Graphite + SiOLi (4 : 6 weight ratio) | 84% | 40% or less | 71% | 40% or less |
| 258 | | Graphite + SiOLi (3 : 7 weight ratio) | 83% | 40% or less | 70% | 40% or less |
| 259 | | Graphite + SiOLi (2 : 8 weight ratio) | 83% | 40% or less | 68% | 40% or less |
| 260 | | Graphite + SiOLi (1 : 9 weight ratio) | 82% | 40% or less | 66% | 40% or less |
| 261 | | SiOLi | 82% | 40% or less | 65% | 40% or less |
| 262 | | LTO | 99% | 93% | 95% | 83% |
| 263 | | LNO | 93% | 86% | 86% | 69% |
| 264 | | LTO + LNO (9 : 1 weight ratio) | 99% | 92% | 95% | 83% |
| 265 | | LTO + LNO (8 : 2 weight ratio) | 98% | 92% | 95% | 82% |
| 266 | | LTO + LNO (7 : 3 weight ratio) | 98% | 91% | 94% | 81% |
| 267 | | LTO + LNO (6 : 4 weight ratio) | 97% | 91% | 93% | 79% |
| 268 | | LTO + LNO (5 : 5 weight ratio) | 97% | 91% | 92% | 76% |
| 269 | | LTO + LNO (4 : 6 weight ratio) | 96% | 89% | 92% | 74% |
| 270 | | LTO + LNO (3 : 7 weight ratio) | 96% | 88% | 90% | 74% |
| 271 | | LTO + LNO (2 : 8 weight ratio) | 96% | 88% | 88% | 71% |
| 272 | | LTO + LNO (1 : 9 weight ratio) | 96% | 87% | 87% | 70% |

[Table 20]

| No. | Positive electrode material | Negative electrode material | Capacity retention at room temperature | | Capacity retention at 70°C | |
|---|---|---|---|---|---|---|
| | | | Production process | | Production process | |
| | | | Aqueous | Solvent-based | Aqueous | Solvent-based |
| 273 | | Graphite | 88% | 80% | 79% | 62% |
| 274 | | Graphite + SiO (9.5 : 0.5 weight ratio) | 87% | 74% | 74% | 42% |
| 275 | | Graphite + SiO (9 : 1 weight ratio) | 84% | 61% | 73% | 40% or less |
| 276 | | Graphite + SiO (8 : 2 weight ratio) | 84% | 49% | 72% | 40% or less |
| 277 | | Graphite + SiO (7 : 3 weight ratio) | 84% | 40% or less | 72% | 40% or less |
| 278 | | Graphite + SiO (6 : 4 weight ratio) | 83% | 40% or less | 67% | 40% or less |
| 279 | | Graphite + SiO (5 : 5 weight ratio) | 82% | 40% or less | 67% | 40% or less |
| 280 | | Graphite + SiO (4 : 6 weight ratio) | 82% | 40% or less | 65% | 40% or less |
| 281 | | Graphite + SiO (3 : 7 weight ratio) | 81% | 40% or less | 63% | 40% or less |
| 282 | | Graphite + SiO (2 : 8 weight ratio) | 80% | 40% or less | 62% | 40% or less |
| 283 | | Graphite + SiO (1 : 9 weight ratio) | 78% | 40% or less | 61% | 40% or less |
| 284 | | SiO | 76% | 40% or less | 61% | 40% or less |
| 285 | | Graphite + SiOLi (9.5 : 0.5 weight ratio) | 90% | 81% | 77% | 44% |
| 286 | | Graphite + SiOLi (9 : 1 weight ratio) | 89% | 61% | 76% | 40% or less |
| 287 | | Graphite + SiOLi (8 : 2 weight ratio) | 87% | 50% | 74% | 40% or less |
| 288 | | Graphite + SiOLi (7 : 3 weight ratio) | 87% | 40% or less | 73% | 40% or less |
| 289 | LNMO (Boric acid + CMC-Na) | Graphite + SiOLi (6 : 4 weight ratio) | 85% | 40% or less | 72% | 40% or less |
| 290 | | Graphite + SiOLi (5 : 5 weight ratio) | 83% | 40% or less | 71% | 40% or less |
| 291 | | Graphite + SiOLi (4 : 6 weight ratio) | 83% | 40% or less | 71% | 40% or less |
| 292 | | Graphite + SiOLi (3 : 7 weight ratio) | 82% | 40% or less | 70% | 40% or less |

(continued)

| No. | Positive electrode material | Negative electrode material | Capacity retention at room temperature | | Capacity retention at 70°C | |
|---|---|---|---|---|---|---|
| | | | Production process | | Production process | |
| | | | Aqueous | Solvent-based | Aqueous | Solvent-based |
| 293 | | Graphite + SiOLi (2 : 8 weight ratio) | 82% | 40% or less | 67% | 40% or less |
| 294 | | Graphite + SiOLi (1 : 9 weight ratio) | 80% | 40% or less | 65% | 40% or less |
| 295 | | SiOLi | 80% | 40% or less | 65% | 40% or less |
| 296 | | LTO | 97% | 92% | 93% | 81% |
| 297 | | LNO | 91% | 84% | 83% | 66% |
| 298 | | LTO + LNO (9 : 1 weight ratio) | 97% | 92% | 93% | 81% |
| 299 | | LTO + LNO (8 : 2 weight ratio) | 96% | 91% | 92% | 78% |
| 300 | | LTO + LNO (7 : 3 weight ratio) | 95% | 90% | 92% | 77% |
| 301 | | LTO + LNO (6 : 4 weight ratio) | 95% | 90% | 91% | 77% |
| 302 | | LTO + LNO (5 : 5 weight ratio) | 94% | 89% | 89% | 75% |
| 303 | | LTO + LNO (4 : 6 weight ratio) | 94% | 88% | 86% | 72% |
| 304 | | LTO + LNO (3 : 7 weight ratio) | 93% | 87% | 85% | 71% |
| 305 | | LTO + LNO (2 : 8 weight ratio) | 93% | 87% | 85% | 69% |
| 306 | | LTO + LNO (1 : 9 weight ratio) | 93% | 86% | 84% | 69% |

It can be seen that, in the combinations of the positive electrode material and the negative electrode materials shown in Tables 12 to 20, both at room temperature and at high temperature (70°C), the batteries obtained using the negative electrode mixture slurries prepared through the aqueous production process exhibited cycle characteristics superior to those of the batteries obtained using the negative electrode composite slurries prepared through the solvent-based production process.

<Exhibited Discharge Capacity>

[Positive Electrode Mixture Slurries Using Other Neutralizers (Comparative Examples)]

Positive electrode mixture slurries were each prepared by mixing 95 parts of a positive electrode material (complex oxide (A)), 2 parts of acetylene black as a conductive additive, 0.7 parts of carboxymethyl cellulose sodium salt (CMC-Na) "CMC DAICEL 2200" (Daicel Miraizu Ltd.) as a dispersant, 1.3 parts of a neutralizer, and 1 part of an acrylic emulsion as a binder, then adding 25 parts of water thereto, and kneading the resulting mixture using a planetary mixer (TK HIVIS MIX, PRIMIX Corporation). As the positive electrode material, three types of materials, namely, NCA (lithium nickel-cobalt-aluminium oxide $LiNi_{0.8}Co_{0.15}Al_{0.05}O_2$), NMC622 ($LiNi_{0.6}CO_{0.2}Mn_{0.2}O_2$), and NMC811

($LiNi_{0.8}Co_{0.1}Mn_{0.1}O_2$) were used. As the neutralizer, sulfuric acid or oxalic acid was used. Positive electrodes for an electrochemical device and lithium-ion secondary batteries for evaluation of output characteristics were prepared in the same manner as described above, except that the neutralizer was changed from boric acid to sulfuric acid (Comparative Example 4) and to oxalic acid (Comparative Example 5).

Exhibited discharge capacities were evaluated using the lithium-ion batteries for evaluation of output characteristics, including the same positive electrodes for an electrochemical device as used for the above-described evaluation of cycle characteristics at room temperature and the lithium-ion batteries for evaluation of output characteristics, including the positive electrodes obtained by changing the neutralizer used in the above-described positive electrodes from boric acid to sulfuric acid or oxalic acid.

[Measurement Conditions]

First, each of the lithium-ion secondary batteries for evaluation of output characteristic was charged by a constant current-constant voltage (CC-CV) charging method. In the CV mode, charging was terminated when the current value reached one-tenth of the current value set in the CC mode. Next, the batteries were discharged at a constant current at 25°C with the one-hour rate (1.0C rate) set to 200 mA when the positive electrode material was NCA, 190 mA when the positive electrode material was NMC622, and 200 mA when the positive electrode material was NMC811. The voltage range was 3.0 to 4.3 V After the discharge was terminated, the amount of electricity obtained was calculated by performing integration of the time required for the discharge and the current value at that time to determine the discharge capacity. The results are shown in Table 21.

[Table 21]

| | Production process | Positive electrode material | Exhibited discharge capacity |
|---|---|---|---|
| Example 5 | Aqueous (Boric acid + CMC-Na) | NCA | 196 mAh/g |
| | | NMC622 | 171 mAh/g |
| | | NMC811 | 193 mAh/g |
| Comparative Example 2 | Solvent-based (PVdF) | NCA | 195 mAh/g |
| | | NMC622 | 168 mAh/g |
| | | NMC811 | 193 mAh/g |
| Comparative Example 4 | Aqueous (CMC-Na + sulfuric acid) | NCA | 144 mAh/g |
| | | NMC622 | 123 mAh/g |
| | | NMC811 | 108 mAh/g |
| Comparative Example 5 | Aqueous (CMC-Na + oxalic acid) | NCA | 133 mAh/g |
| | | NMC622 | 116 mAh/g |
| | | NMC811 | 155 mAh/g |

As can be seen from Table 21, regardless of the type of positive electrode material used, the lithium-ion secondary batteries for evaluation of output characteristics, including the positive electrodes for an electrochemical device produced through the process described in Example 5 (aqueous) exhibited the discharge capacities roughly equivalent to those of the batteries including the positive electrodes for an electrochemical device produced through a conventional solvent-based process (Comparative Example 2), and this indicates that a decrease in capacity due to hydrolysis of the positive electrode active material did not occur. In contrast, it was found that, in the cases where other neutralizers not containing a group 13 element (B) of the periodic table were used as the neutralizer (Comparative Examples 4 and 5), the exhibited discharge capacities were much lower than the exhibited discharge capacities obtained when the positive electrodes for an electrochemical device produced through the conventional solvent-based process were used (Comparative Example 2).

<Cycle Characteristics at Room Temperature: 2> Capacity retentions without additive in electrolyte solution, Comparison with the case of solvent-based process

The electrolyte solution used in the lithium-ion batteries for evaluation of output characteristics used in the evaluation described in "Cycle Characteristics at Room Temperature: 1" was changed to the following electrolyte solution, and the same evaluation was made after 1200 cycles. The results are shown in Table 22.
Electrolyte solution: 1.0 $MLiPF_6$ + EC/DMC = 1 : 1 (volume ratio)
1,3-propanesultone (PS) was not added.

[Table 22]

| | Production process | Positive electrode material | Capacity retention after 1200 cycles |
|---|---|---|---|
| Example 5 | Aqueous (Boric acid + CMC-Na) | NCA | 83% |
| | | NMC622 | 88% |
| | | NMC811 | 87% |
| Comparative Example 2 | Solvent-based (PVdF) | NCA | 47% |
| | | NMC622 | 59% |
| | | NMC811 | 55% |

As can be seen from Table 22, in the case of the electrodes using the conventional solvent-based binder (PVdF) (Comparative Example 2), poor cycle characteristics were exhibited when 1,3-propanesultone (PS) was not contained in the electrolyte solution, whereas, in the case of the electrodes produced through an aqueous process using the neutralizing dispersant according to the present invention (Example 5), good cycle characteristics were exhibited even when the additive for inhibiting the occurrence of oxidative decomposition in the positive electrode was not contained in the electrolyte solution. It has been a common practice to add an additive such as vinylene carbonate (VC) or 1,3-propanesultone (PS) to inhibit oxidative decomposition of an electrolyte solution in a positive electrode in order to prevent a decrease in capacity per cycle. However, according to the present invention, it is not necessary to add such an additive or the amount of the additive can be reduced, and this enables cost reduction and simplification of a production process.
The neutralizing dispersant used in the present invention, composed of, for example, a combination of a boron compound and a naturally-occurring polymer or the like (water-soluble polymer (C)), has properties of forming a coating that coats an electrode active material (complex oxide (A)). It is considered that, owing to the film of the water-soluble polymer (C) formed on the surface of the electrode active material and the presence of boron in the film, a protective effect similar to those of the additives such as vinylene carbonate is exhibited, which leads to the improvement in the cycle characteristics. According to the present invention, it becomes possible to improve the cycle characteristics while reducing the consumption of lithium.
The above examples and the like demonstrate that even a slurry prepared using a lithium-containing metal oxide through an aqueous process can inhibit an increase in pH and a decrease in viscosity over a long period of time, and it is expected that a non-aqueous electrolyte secondary battery with excellent high-temperature durability is provided by installing an electrode produced using such a slurry.
The embodiments disclosed herein should be construed in all respects as illustrative and not restrictive. The scope of the invention is indicated by the appended claims rather than by the foregoing description, and all changes that come within the meaning and range of equivalency are intended to be embraced therein.

**Claims**

1. An electrode for an electrochemical device, the electrode comprising:

a neutralizing dispersant; and
a complex oxide (A) capable of occluding and releasing lithium ions,
wherein the neutralizing dispersant contains:

a water-soluble compound (B') containing a group 13 element (B) of the periodic table; and
at least one water-soluble polymer (C) selected from the group consisting of an alkali metal salt, alkaline-earth metal salt, or ammonium salt of alginic acid, methylcellulose, carboxymethyl cellulose, carboxymethyl starch, or carrageenan, pullulan, guar gum, and xanthan gum,

a film of the water-soluble polymer (C) is formed on a surface of the complex oxide (A), and
the group 13 element (B) of the periodic table is present in the film of the water-soluble polymer (C).

2. The electrode according to claim 1, wherein
the group 13 element (B) of the periodic table includes boron.

3. The electrode according to claim 2, further comprising a conductive additive and a binder, wherein

an electrode mixture is composed of the neutralizing dispersant, the complex oxide (A), the conductive additive, and the binder, and
the boron content in the electrode mixture is not less than 0.001 wt% and not more than 5 wt%.

4. The electrode according to claim 2 or 3, wherein
when the content of the water-soluble compound (B') containing the group 13 element (B) of the periodic table is taken as 100 parts by weight, the content of a boron-containing water-soluble compound is in a range of 51 parts by weight to 100 parts by weight.

5. The electrode according to any one of claims 1 to 4, wherein

the complex oxide (A) is a complex oxide having a composition represented by $Li_aNi_bCo_cMn_dM_{1-b-c-d}O_2$ or a complex oxide having a composition represented by either $Li_{4+x}Ti_5O_{12}$ or $Li_{2+x}Ti_3O_7$,
where in the above chemical formulae, M is at least one element selected from the group consisting of Al, Mg, Ti, Fe, V, Cr, Nb, Mo, W, Cu, Zn, Ga, In, Sn, Zr, Ru, and La,

$$0.8 \leq a \leq 1.0,$$

$$0 < b \leq 1.0,$$

$$0 \leq c \leq 0.4,$$

$$0 \leq d \leq 0.35,$$

$$0 < b + c + d \leq 1.0,$$

and

$$0 \leq x \leq 3.$$

6. A non-aqueous electrolyte secondary battery comprising:

a positive electrode;
a negative electrode; and
an electrolyte interposed between the positive electrode and the negative electrode,
wherein at least one of the positive electrode and the negative electrode is the electrode according to any one of claims 1 to 5.

## INTERNATIONAL SEARCH REPORT

International application No.

**PCT/JP2021/044845**

### A. CLASSIFICATION OF SUBJECT MATTER

*H01M 4/36*(2006.01)i; *H01M 4/485*(2010.01)i; *H01M 4/505*(2010.01)i; *H01M 4/525*(2010.01)i; *H01M 4/62*(2006.01)i; *H01G 11/06*(2013.01)i; *H01G 11/30*(2013.01)i
FI:    H01M4/62 Z; H01M4/485; H01M4/36 C; H01M4/525; H01M4/505; H01G11/06; H01G11/30

According to International Patent Classification (IPC) or to both national classification and IPC

### B. FIELDS SEARCHED

Minimum documentation searched (classification system followed by classification symbols)

H01M4/36; H01M4/485; H01M4/505; H01M4/525; H01M4/62; H01G11/06; H01G11/30

Documentation searched other than minimum documentation to the extent that such documents are included in the fields searched

Published examined utility model applications of Japan 1922-1996
Published unexamined utility model applications of Japan 1971-2022
Registered utility model specifications of Japan 1996-2022
Published registered utility model applications of Japan 1994-2022

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2013-93333 A (HYDRO-QUEBEC) 16 May 2013 (2013-05-16)<br>  claim 1, paragraph [0083] | 1-6 |
| X | JP 2012-94498 A (MITSUBISHI CHEMICALS CORP.) 17 May 2012 (2012-05-17)<br>  claims 1, 2, paragraphs [0036]-[0043], [0141] | 1-6 |
| Y | JP 2012-69488 A (MITSUBISHI CHEMICALS CORP.) 05 April 2012 (2012-04-05)<br>  claims 1-3, paragraphs [0040]-[0044], example 1 | 1-6 |

☐ Further documents are listed in the continuation of Box C.        ☑ See patent family annex.

\*    Special categories of cited documents:
"A"  document defining the general state of the art which is not considered to be of particular relevance
"E"  earlier application or patent but published on or after the international filing date
"L"  document which may throw doubts on priority claim(s) or which is cited to establish the publication date of another citation or other special reason (as specified)
"O"  document referring to an oral disclosure, use, exhibition or other means
"P"  document published prior to the international filing date but later than the priority date claimed

"T"  later document published after the international filing date or priority date and not in conflict with the application but cited to understand the principle or theory underlying the invention
"X"  document of particular relevance; the claimed invention cannot be considered novel or cannot be considered to involve an inventive step when the document is taken alone
"Y"  document of particular relevance; the claimed invention cannot be considered to involve an inventive step when the document is combined with one or more other such documents, such combination being obvious to a person skilled in the art
"&"  document member of the same patent family

| Date of the actual completion of the international search | Date of mailing of the international search report |
|---|---|
| **01 February 2022** | **15 February 2022** |

| Name and mailing address of the ISA/JP | Authorized officer |
|---|---|
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

**INTERNATIONAL SEARCH REPORT**
Information on patent family members

| International application No. |
| --- |
| **PCT/JP2021/044845** |

| Patent document cited in search report | | | Publication date (day/month/year) | Patent family member(s) | | | Publication date (day/month/year) |
| --- | --- | --- | --- | --- | --- | --- | --- |
| JP | 2013-93333 | A | 16 May 2013 | US | 2006/0166093 | A1 | |
| | | | | claim 1, paragraph [0156] | | | |
| | | | | EP | 1573834 | B1 | |
| | | | | CA | 2411695 | A1 | |
| | | | | AU | 2003283148 | A1 | |
| JP | 2012-94498 | A | 17 May 2012 | (Family: none) | | | |
| JP | 2012-69488 | A | 05 April 2012 | (Family: none) | | | |

Form PCT/ISA/210 (patent family annex) (January 2015)

**EP 4 156 332 A1**

REFERENCES CITED IN THE DESCRIPTION

**Patent documents cited in the description**

- WO 2016052715 A
- JP 2009064564 A